# EUROPEAN PATENT SPECIFICATION

(11) **EP 1 540 632 B1**
(45) Date of publication and mention of the grant of the patent: **25.03.2009**
(21) Application number: 03784448.7
(22) Date of filing: 04.08.2003
(51) Int. Cl.: G09F 23/00, G09F 3/14, B65C 7/00

(54) **MEANS AND METHOD FOR MARKING PRODUCTS**
MITTEL UND VERFAHREN ZUR MARKIERUNG VON PRODUKTEN
MOYEN ET PROCEDE DE MARQUAGE DE PRODUITS

(30) Priority: 05.08.2002 US 400710 P
(43) Date of publication of application: 15.06.2005
(73) Proprietor: HOLO-POINT LTD., 38100 Granot (IL)
(72) Inventor: SAR-EL, Israel, 69512 Tel-Aviv (IL); YARDENI, Amos, 36034 Kiryat Tivon (IL)
(74) Representative: White, Duncan Rohan
(86) International application number: PCT/IL2003/000638
(87) International publication number: WO 2004/015655

(56) References cited:
- US-A- 2 189 026
- US-A- 3 021 630
- US-A- 3 283 918
- US-A- 4 956 040

## Description

### Field of the Invention

The invention relates to the field of using tags for marking products in general, and particularly to marking meat and fish products attesting to their authentication (for example - being Kosher) and the means and method applied for achieving this end.

### Background of the Invention

It will be of utmost value to mark products in a manner attesting, unequivocally and with no fear of forgery and/or fraud, that the marked product conforms with given criteria.

For example, marking a product to show that it is a Kosher product as certified by a recognized Rabbinical authority, imparts substantial value to it - for any person desiring a Kosher product. It is important to note that the being Kosher (herein after - Kashrut) mark is the only evidence exposed to the buyer, which verily points at the successful end of a long and complicated process of breeding the animal (for example - the chicken), preparing it, slaughtering it in accordance with a specified ritual, examining and packing it, subject to the strict conditions of the Kashrut laws.

Regarding the "marking for Kashrut" aspect, obviously it is presented solely as an example, used just for the convenience of describing the present invention. However, any professional in this field would understand, that the need for markings at the same order of reliability in the customer's eyes, is also required in other instances. For example - marking the product as Halal in accordance to the Islam teachings (for Muslim customers); marking as conforming with this or that health criteria; marking the product as a product being one such as an animal fed solely by "organic" substances, and the like.

As for the example of marking meat products by the "Kosher" product indication, there are nowadays several means and methods in use to mark Kosher products as such.

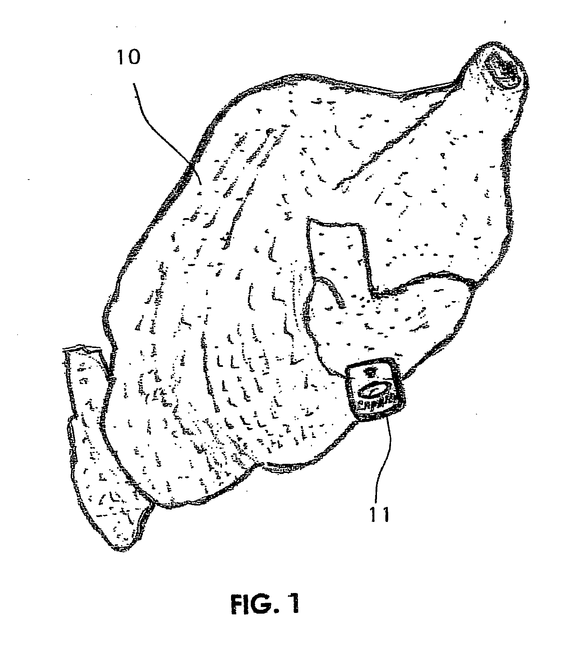

Referring to the attached figures, figure. No. 1 presents a meat product (chicken) 10 marked as per earlier know-how, namely by a metal tag type 11 of Kashrut indication. Tag 11 is attached to the meat by means of pinching its skin. Metal tag 11 is produced by stamping (with a mold), printed with the Kashrut mark in a printing house and it is already printed upon arrival in the packing house for attachment. Producing the tag by stamping, which is a known, widely available and simple method, exposes the metal tag to being forged easily.

Because the metal type tag is produced from metallic materials, it mandates paying strict attention to the need of removing it from the meat products before, e.g., warming the product in a micro waves oven. Moreover, there are some countries that forbid marking meat products by metal tags (for health reasons).

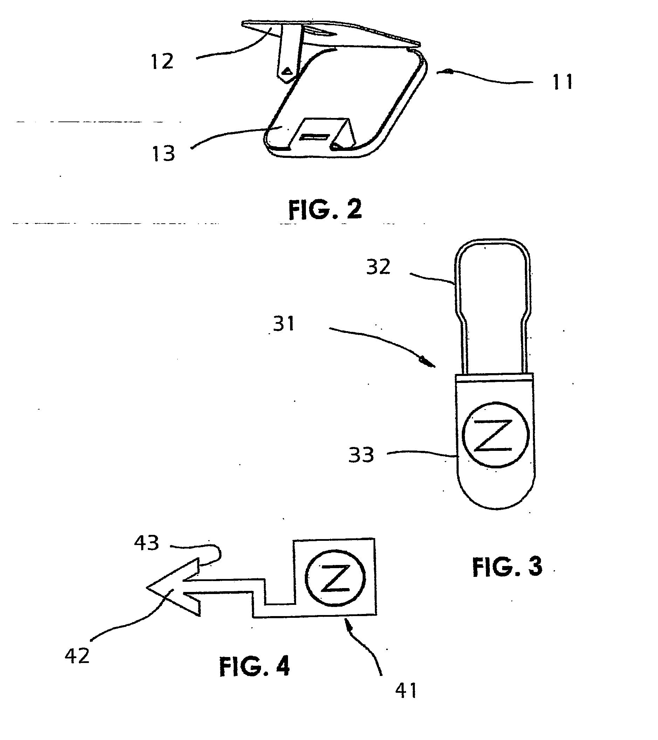

Referring to Figure 2, Tag 11 is adapted for affixing it on meat products by a manual operation, by pressing the two plates ("wings") 12 and 13 of the tag one towards the other, thus "pinching" a small piece of the chicken's skin between them.

Regarding this aspect, an additional (beyond being metallic) limitation stems: the attachment might not be secure enough (as only a thin piece of skin is pinched).

It is unnecessary to bring forth the problems arising from the consequences of, for example, separation and eventual loss of tag from the product. A customer not seeing the Kashrut tag, may well reject the product. Thus all the long Kosher making procedure described above, results in total loss.

The tag's manual attachment procedure requires, naturally, manpower for performing it, with all the attending drawbacks: fiscal expenditures, quality assurance issues, low rate of production, etc.

Figure No. 3 is a close up view of another type of a Kashrut marking tag 31 known previously. This tag resembles a safety pin. It is composed of a metal wire 32 that, after being anchored in the meat chunk (not shown),either by piercing or by winding around it, is locked into a tag component made of plastic material 33.

Tag 31 does not display on it, from the visual aspect, any stamp or inscription that is difficult to forge or that prevents counterfeit.

As mentioned, the structure of tag 31 includes a metallic wire 32 that comes to contact with the meat. Hence, obviously the "safety pin" tag configuration 31 is also prevented from being cooked / warmed up in a microwaves oven (due to the risk of forgetting to remove the tag in due time). Moreover, as stated, it can not be used in countries that forbid marking meat products by metal tags (for health reasons or otherwise). The mode of securing the tag, as closing a safety pin, also allows for its easy removal from the marked product, and using it for fraudulent purposes later on, i. e., exploiting it for marking another product (that might be non Kosher). This, without even providing a clear, visual and unequivocal indication that the tag was removed from the original product for which it was meant (the tag is not tamper proof). The tag itself is designed for manual application unto the meat products, just like closing a safety pin. Hence, the manual affixing of tag to product, naturally requires manpower for performing it, with all the attending drawbacks: fiscal expenditures, quality assurance issues, low rate of operation, etc.

Figure No. 4 shows a marking tag 41 formed in the shape of an arrow or rather a dart, that is sometimes used for marking Kashrut of meat products (not shown). The marking tag is connected to the tail of the arrow like item 42, meant to be stuck by force into the meat chunk whose Kashrut needs to be certified. The arrowhead might pass through the meat chunk and exit on the other side. The wings 43 of the arrowhead are opened after it crosses the meat piece, hence it is impossible to retrieve the arrow by pulling it backwards. The arrowhead too, might remain in the meat chunk, anchored like a hook. This operation might be mechanized by using means enabling mechanized insertion of said tag, such has a "Sticking pistol". In this approach, too, the tag connected to the arrow, does not display on it, from the visual aspect, any stamp or inscription that is difficult to forge or that prevents counterfeit. The necessity to have the arrow traverse the meat intended for marking, prevents the use of the arrow for marking tough chunks of meat, for example bones, frozen meat. On the other hand, the manner of marking by actually passing the pieces, hinders the use of arrows for marking soft parts of meat, such as skin. Many meat cuts might not be able to hold the arrow that pierced them. An additional drawback of employing the marking darts is the outcome of the inherent difficulty in their removal. Trying to remove the tag from the Kosher meat chunk that was marked by the dart might cause tearing the arrow, removing part and leaving part of it stuck as a foreign body in the meat, that might finish up as a health risk. The capability of mechanizing the darts' piercing procedure did not bring about total automation of the procedure, probably due to the drawbacks of the marking by darts approach, as we indicated above.

Another marking alternative might be materialized by using adhesive ("sticky") tape, namely, winding a marking tape around a chunk of the meat (for example - the leg of a Kosher chicken), and bonding the two ends of the tape one to the other. The tag does not display on it, from the visual aspect, any stamp or inscription that is difficult to forge or that prevents counterfeit. This and more, the meat chunk is exposed to severe environmental conditions: cold, humidity, fats from the fauna, pressure rinsing, contact with detergents, hurling around (shaking) from the plant to the store. Obviously, the marking tape will be exposed to the same conditions. Under these circumstances, a label (tab) that is based on securing with adhesive, might easily to fail; especially as sometimes the label is a paper strip that might get wet and disintegrate. By its nature, the use of glue, enables easy opening, and hence the potential of applying the same "sticky" tape on an uncertified product exists.

As a result of these conditions, in the times that preceded the invention, the means and methods that were applied for marking Kashrut of meat products in general, and especially poultry, were prone to many disadvantages, (all or part of them, as the case might have been) -
they are not displaying, from the visual aspect, any stamp or inscription that is difficult to forge or that prevents counterfeit;
they do not leave, from the visual aspect, any signs indicating clearly and with ease of detection, any attempt by whomever that tried to tamper with the marking. In other words - it is possible to remove them with relative ease off the original product they were meant to mark, and recycle them for use on another, non certified product;
they are limited, as for the possibility of affixing the mark on a variety of products different one from the others as per the aspect of their hardness;
they are susceptible to environmental conditions to which the product might be exposed;
they pose a risk in case the product marking was not completely removed from the product before e.g., warming up the product in a microwave oven (in case of metallic marks);
their use is forbidden in certain markets (again, when relating to metallic markings);
some of them are difficult to be completely separated from the product, thus raise the risk that shreds of them would remain in the product; and from the manufacturers point of view, they require dedicated manpower for performing the manual task of attaching the marking tags, and are not adapted for integration into the mechanized and automated production lines (for example-in a poultry processing line).

US 2189026 discloses a seat device for tagging meals, poultry and other kinds of merchandise, articles or materials. The seal device is made from sheet metal, one end being sharpened to enable the seal to pierce through the article to be tagged. The two ends of the seal are then seal pressed so as to be suitably deformed thereby becoming irremovably interlocked.

US 3021630 relates to marking and identifying of fowl or the like. A paper-like strip can then be marked.

US 4956040 discloses a method for adhering holograms to a textile. An adhesive product is used for such adhering.

US 3283918 discloses a programmed apparatus having flexible controls that are adapted to receive changed instructions periodically for executing complex instructions to produce a new sequence of instructions.

### Summary of the Invention

Accordingly, the present invention comprises features directed to the objectives that follow herein under.

Marking Kashrut of meat and fish products in general and poultry in particular, where the mark itself is imbedded in a visual manner that renders it difficult to be forged / counterfeited.

Tampering with the mark would leave clear and non-equivocally visual imprints.

The application of the marks is not constrained by the hardness of the meat or fish subjected to being marked (for example - it would serve well also for marking bones or a frozen parts).

The mark will withstand environmental conditions of storage and transportation of meat and fish, and this without being damaged or removed from the product so that the mark would be clearly seen and understood by the end of the line customer.

The mark itself is not metallic, and hence causes no harm to the product in case of warming up / cooking in a microwave oven without removing the mark. At the time, because the mark in non-metallic, it fits being used in markets where use of metal marking means of meat products is forbidden.

The act of removing the mark does not generate a risk of having parts of the mark's material remain as residual matter within the product. Even after cutting the marking means, no components of the marking means would remain in the marked meat chunk.

The marking procedure is given to being completely mechanized and automated (and it does not call for adding manpower). The process may be integrated into the existing processing line for meat and fish products without having to slow down or stop the production line or implementing drastic changes in the line. In other words, what is suggested is the installation of an additional production assembly that can be integrated into the meat or fish processing lines.

The above objectives are addressed by a marking tag for authentication of products, that includes a band (also known as "cable tie") unto which a hologram is connected.

In a preferred embodiment of the tag, the subject of the present invention, the hologram is applied to a figure on a polymeric foil, welded by an ultra-sonic welding or ultra-sonic heating to the band.

According to a first aspect of the present invention, there is provided a method for marking food products in accordance with claim 1, An array of assemblies is utilized for automatic marking of product's Kashrut. The array includes means for feeding holograms towards the product to be marked, means for winding bands on the product intended to be marked, means for ultra-sonic welding of the hologram to the band, and an anvil means that serves as a support to the welding means at the stage of welding the hologram unto the band.

There is also provided an array for marking Kashrut of poultry by automatically winding a band around the Kosher fowl, and automatic connection of a hologram to the band, where the operation of the array is integrated with the operation of a regular poultry processing product line, and includes-connection of marking means, at least one, to at least one fowl, that is handled in a processing line along a conveyer, marking the fowl with a tag In accordance with the invention, while propelling the marking means to move along together with the fowl at a speed that is substantially equal to that of the conveyer moving the fowl in the processing line, and that-when the marking operation terminates, disconnecting the marking means from the fowl to which it was connected, and with a cyclic movement, returning the marking means backwards for connecting to an additional fowl that is propelled at that instant along the conveyer belt, for marking it, and so on, repeatedly.

### Brief Description of the Drawings

The present invention will be understood better and appreciated more fully from the following detailed description, taken in conjunction with the figures and attachments, in which:
Figure No. 1 is, as said, a view of a meat product marked as per earlier know-how, namely by a Kashrut marking of the metal tag type.
Figure No. 2 is, as said, a close up view of said metal tag attached to the meat product shown in Figure. No. 1.
Figure No. 3 is, as said, a close up view of another type of a Kashrut marking tag known previously.
Figure No. 4 presents, as said, a marking tag formed in the shape of a dart configuration, that is sometimes used for marking Kashrut of meat products.
Figures No. 5 and 6 are illustrations of the Kashrut marking tag in accordance with the present invention, wrapped around the circumference of a meat chunk and pierced into a chunk of meat respectively.
Figures No. 7a to 7d describe other configurations of the Kashrut marking tag in accordance with the present invention.
Figures No. 8a to 8g describe the stages of applying the Kashrut marking tag to the meat chunk (fowl in the pictured example), in accordance with a preferred configuration of the present invention. A configuration that includes the application of the hologram to the band, as part of the process of implementing the marking tag to a part of the meat.
Figures No. 9a to 9c illustrate the stages of a piercing a meat chunk and marking it in accordance with the marking embodiment illustrated in figure 6.
Figure No. 10 constitutes an illustration of a typical line for processing products of the type that is to be marked in accordance with this invention.
Figures No. 11a to 11d describe, just schematically, a general, conceptual example of one idea how the present invention can be applied to regular production line as described by Fig, No. 10.
Figures 12a to 12i describe an example of an array that enables marking birds (fowls) in accordance with the present invention, in a mechanized and automated manner, while being integrated into the existing procedure for processing the poultry.
Figures 13a and 13b depict, through a side view, the action of an automatic device for applying bands, in the manner it is installed in the system in accordance with figures No. 12a to No. 12i.
Figures 14a to 14h shows a sequence that describes the action of the feeding means supplying the marking tags (for example the holograms) and the anvil means - in the manner they are installed in the system in accordance with figures 12a to 12i.
Figure 15 is an illustration of a control device in the manner it is installed in the system in accordance with figures 12a to 12i, for detecting the presence of a product on the line and providing its location.
Figure 16a to 16c illustrates an additional example of an array that enables marking birds (fowls) in accordance with the present invention, in a mechanized and automated manner, while integrating into the existing procedure for processing the poultry.

### Detailed Description of the Preferred Embodiments

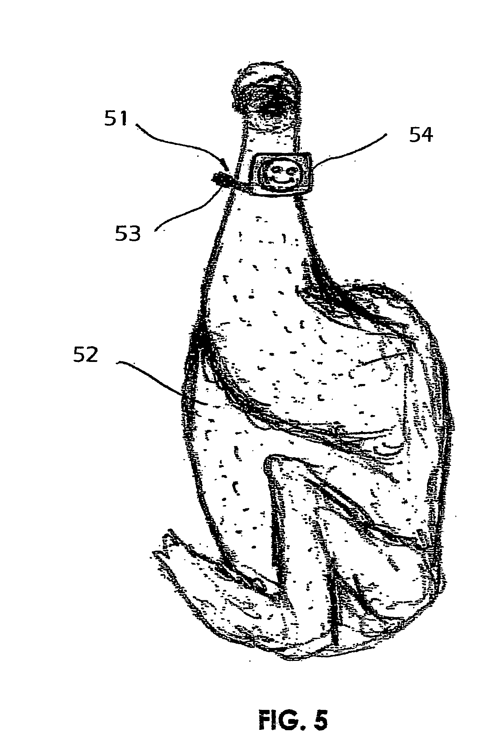

Let's refer to Figure No. 5. This Figure shows a Kashrut marking tag 51 in accordance with the present invention, wrapped around the circumference of a chunk of meat 52 (a chicken in the presented Figure). Tag 51 comprise a band (cable tie) 53 and a hologram 54.

The Kashrut marking tag in accordance with this preferred embodiment of the present invention, is based on the integration of a hologram and a band (cable tie). The hologram imparts a prominent and unequivocal visual mark that is difficult to forge. The band is bonding means amenable to tightening, that can be produced in a manner that prevents its opening, except for cutting it with a sharp implement (or by tearing it - but for this a substantial force must be exerted).

The hologram constitutes a figure on a polymeric foil. Holograms that are suited for use in this invention are manufactured and marketed, for example by the DuPont Authentication System Division. The company supplies custom rolls of holograms made mainly of polyester. The visual part that appears on the hologram is also available as a custom order and may include in addition to the eye catcher visual element, also a secret code (that can be seen only through a special decoder).

The band (cable tie) is a plastic component, (for example - made of nylon 6 / polyamide 6-6). Such bands, suited for use in the invention, are manufactured and marketed, by many companies. Automatic tools for cable-tie automatic implementation are provided for example, by the companies Panduit and Hellermann-Tyton GmbH.

A typical structure of a band includes - a free end that is threaded by assembly through a springy clip that constitutes an integral part of the band (and located, mostly, on the opposite end). The springy clip includes a springy tab that enables unidirectional penetration of the band's free end. Following the penetration and tightening of the loop, that was formed as result of threading the free end to the springy clip, the leftover lace may be trimmed (and thus rendering it even more difficult to dismantle the band).

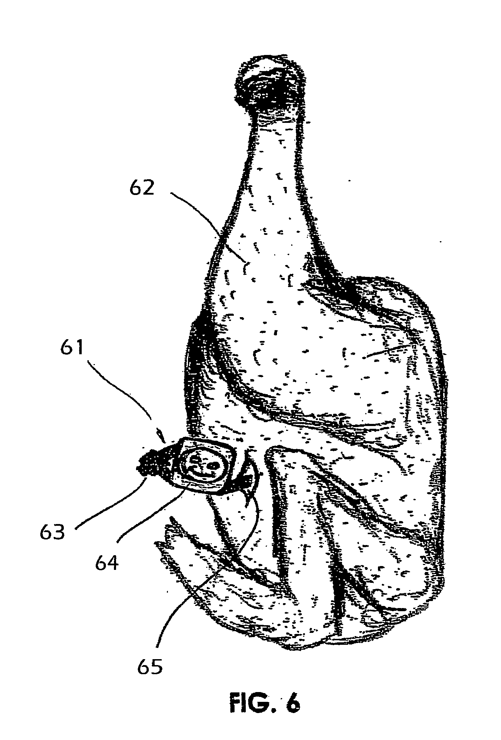

The band's (cable tie) operation is based, by its nature, on the tightening around the element it is encircling. Thus, in Figure No. 5, the band component 51 is wrapped around a chunk of the meat (chicken) 52. However, if we turn to Figure 6, the Figure is an illustration of a different tightening possibility-around only a partial part of the chunk. Figure 6 shows a Kashrut marking tag 61 in accordance with the present invention, wrapped around only a portion of the chunk of meat 62 (also a chicken, in this example). Tag 61 comprises a band (cable tie) 63 and a hologram 64 connected to it. Wherein band 63 passed through opening 65 which was pierced within meat 62 in order to allow tag 61 to be wrapped around only a portion of meat 62.

Securing the hologram unto the band is performed in the shown example, by ultra-sonic welding. Namely, both the polymeric foil (of which the hologram is made) and the plastic material composing the band, undergo-in their bonding one to the other a process of fusion and then re-solldifying. The ultra-sonic welding of the hologram to the band, forms a stable bond, so that it becomes impossible to separate between the hologram and the band without causing prominently irreversible and detectable (easily seen) damage to the hologram.

Ultra-sonic welders for welding plastic components one to the other, are marketed by e.g., Sonic & Materials, Inc. company, supplying equipment that includes a converter, welding beam and a control box for controlling the frequency, amplitude (intensity) and duration of operation time.

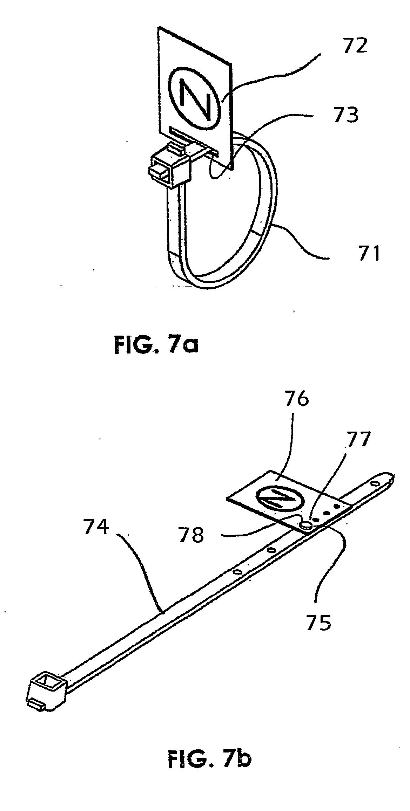

Referring now to Figures No. 7a to 7d, the figures describe other configurations of the Kashrut marking tag in accordance with the present invention.

In Figure No. 7a, a band 71 on which a hologram 72 is threaded, is described. The hologram is designed with an opening 73, through which the band is threaded before its closure.

Figure No. 7b, describes a band 74 designed with a bore 75, one at least, along its length. The hologram 76 is also designed with a bore 77 in it. For the assembly, a rivet 78 will connect the hologram to the band.

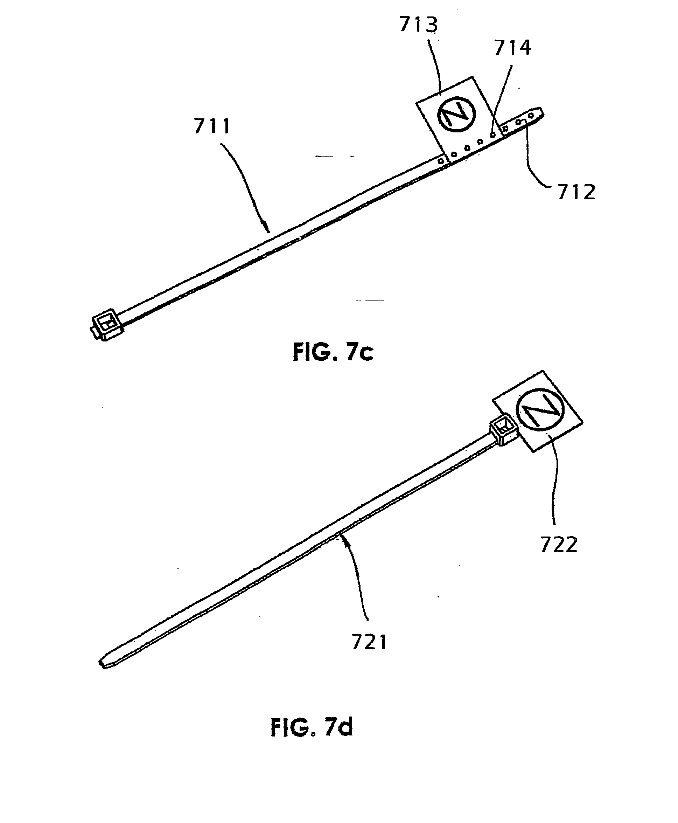

Figure No. 7c, describes a band 711 designed with several projections 712 along its length. The hologram 713 is designed with a number of bores 714 that upon installation, are suited to contain the band's projections in them. The inclusion of the band's projections within the bores designed in the hologram, is so that the tips of the projections extend outwards from over the outer surface 715 of the hologram. In the next step, the projection tips, which are like rivets, are squashed, fitting the hologram into the band. Any professional in this field would understand that the crushing of the projections might be accomplished by several means. For example - mechanical crushing under heat or mechanical crushing while using ultra-sonic heating.

The configurations of said marking tags, as seen when referring to Figures 7a to 7c, are based on mechanical bonding of the hologram to the band. Hence, the level of anti tampering of a tag configured as described in these figures, might be relatively low in comparison to that achieved by the configuration described when referring to Fig's. No. 5 and 6. Wherein the hologram is connected to the band by ultra-sonic welding.

Referring to Figure No. 7d, the drawing depicts a band 721 that includes the hologram 722 as an integral part of it. In this configuration, the hologram is connected (by welding, gluing or by a mechanical connection) to a specific surface 722 located at the band's end.

Any professional skilled in this field will appreciate that it would be possible to locate surface 722 along the band length (in an area that is not expected to be threaded into the band's springy clip). Another possible configuration includes the implementation of the hologram itself as an integral part of the band structure (without any supporting surface).

Let's refer now to Figure's 8a to 8g. The figures describe the sequence of stages taking place while applying the Kashrut marking tag to a meat chunk, in accordance with a preferred configuration of the present invention (a configuration that includes the stage of connecting the hologram to the band, as part of the process of implementing the marking tag itself to a meat chunk).

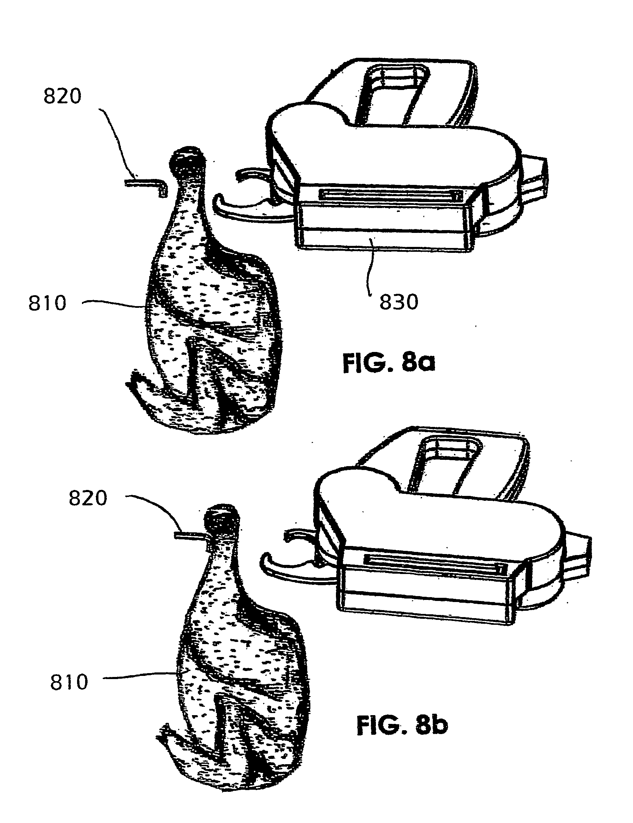

Figure No. 8a presents the meat chunk 810 which it is desired to mark by the Kashrut marking tag (in the shown example, a fowl hanged as it position will be on a typical slaughter house line). An anvil 820 is located at one side of the meat chunk while an automatic tool 830 for cable-tie automatic implementation (such as the one provided the company Hellermann-Tyton GmbH), is position to the other side of the meat. These are "pistil-like" devices that include two grasping arms in their front side. The arms are fitted to grasp the object you wish to tighten with a band. Every activation of the "pistol" binds the current band around the object in need of tightening, threading the tab into the springy clip of the band, tighten the band around the object entrapped between the arms and trims the remainder of the band's free end. A chain of bands feeds the bands' wrapping means shown in the figures.

An advanced model of the device (made by Hallermann Tyton GmbH) is fed separately with straps of bands and springy clips (where their assembly together to form the band takes place in the device itself). Every professional in this field will understand that such device is highly suitable for implementing the marking tag configuration illustrated in Fig. No. 7d. The device could be fed with the straps of bands and the springy clips to which the holograms are connected in advance.

Figure No. 8b shows the coupling of the anvil 820 to the meat chunk's body 810, in the vicinity of the area around which it is desired to wrap the band and bond the marking tag.

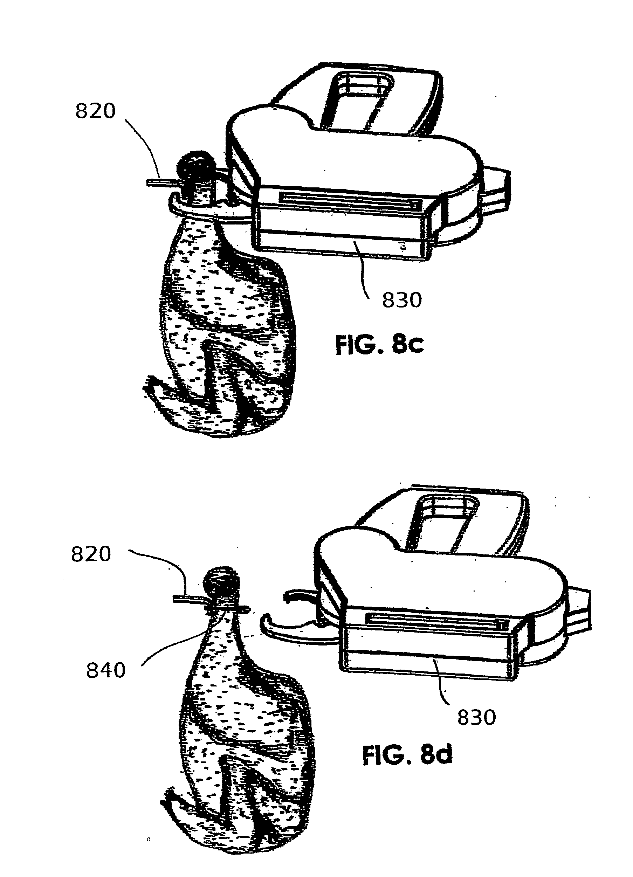

Figure No. 8c describes the automatic tool 830 engaging the meat while anvil 820 is attached to the meat.

Figure No. 8d describes the band 840 wrapped around the meat chunk 810 and the anvil 820 that is pressed against it, while the automatic equipment 830 is already retreating.

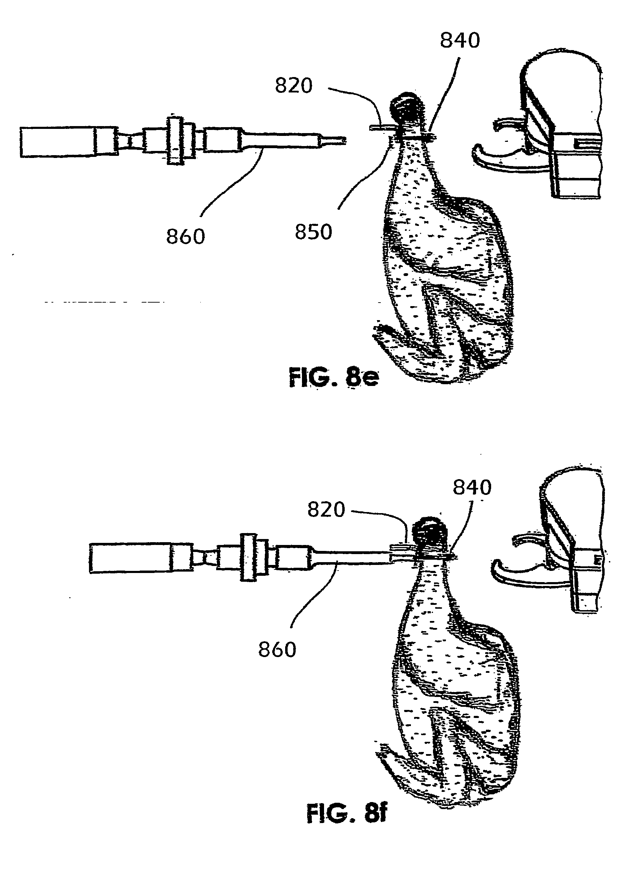

Figure No. 8e describes the bonding of the hologram 850 to band 840. Bonding hologram 850 to the band is done by, first - feeding the hologram into position between the anvil 820 and an ultra-sonic welder 860.

Figure No. 8f describes pressing the ultra-sonic welder 860 against anvil 820 while the hologram is in between. The presence of the anvil thus prevents the sinking of the band into the meat chunk due to the hologram pressure against it. Moreover, in the Figured example, bonding the hologram component 850 to band 840 is done by ultra-sonic welding of the hologram to the band's surface. Efficient ultra sonic welding necessitates exertion of pressure. Hence, anvil 820 is a required implement for the bonding process, as a base towards which 860 welder is pressed.

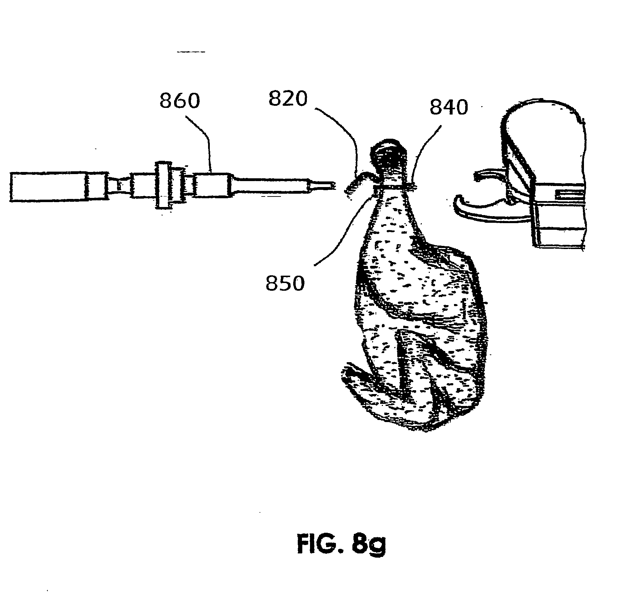

Figure No. 8g describes the end of the process - hologram 850 is already securely connected to band 840, therefore ultra-sonic welder 860 is retreat while anvil 820 is removed. Attention is called to the act of moving the anvil component 820 from the meat chunk that was tagged as kosher. A relatively light retrieval movement does extracting the anvil from band 840 wrapped around it and around the meat chunk. The fact that in the Figured example, the point is application of tags to poultry parts whose limbs are broadened at their end (in the figure - a chicken's leg) prevents the band from being released.

Note that in the continuous sequence described by figures 8a to 8g, the access direction of the automatic device 830 for winding tie bands is in opposition to the movement (i. e., in the opposite direction) of the ultra sonic welder 860 (namely, the angle defined by them is approximately 180o). Any professional skilled in this field would understand, that such a configuration is a convenient one when it is desired to implement the invention along the length of a conveyor, that is as usual, operated in fowls processing lines carrying the fowls that have to be marked. The configuration in which the automatic device for applying the tie bands is on one side of the fowl while the ultra sonic welder is on its other side, enables working simultaneously on both sides, thus shortening the total operation times. However, there is nothing to prevent the execution of the task in a different manner, for example perform the attachment of the hologram to the tie clamp with the means positioned in a different configuration. For example, it is possible to perform the sequence of operations when the movement directions of the devices are co-linear.

In addition, any professional skilled in this field would understand, that the configuration described in the above sequence of Figures 8a to 8g, and that includes the bonding of the hologram to the band as part of the process of applying the marking tag to the meat chunk, is only an example. Another possibility is to prepare the bands in advance, whereby holograms are already attached to them (see for example Fig. 7d). In this case, for the marking process, one has only to wrap the bands (unto which the holograms are already secured), around the meat chunks which are to be marked as Kosher.

Moreover, every professional in this field will appreciate that in a configuration in which the bands were prepared in advance, while to each there is already a hologram attached (for reference see Fig. No. 7d), there will be no need for an anvil. However- it will be possible to further tighten the band on the meat chunk itself.

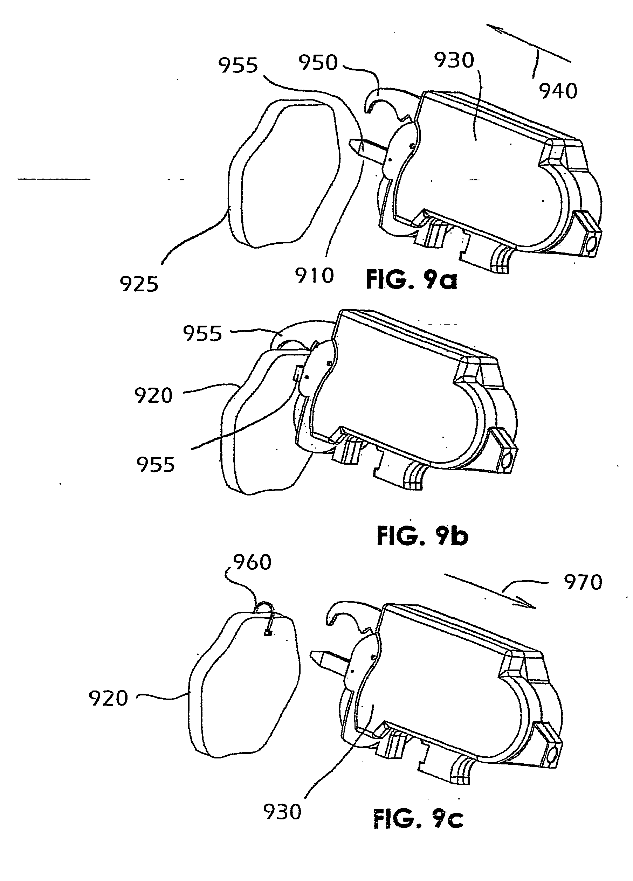

Utilizing the band technology, in accordance with the invention, leads to marking the meat chunks by binding and tightening the mark on their back. But this does not require wrapping the band around the entire circumference of the meat chunk. Let us refer to Figures 9a - 9c, the figures provide an illustration of a sequence wherein a leading piercing implement 910 serves to guide a kosher marking label while being pinned into the meat chunk 920 and wrapped around a certain part of the chunk's circumference (as illustrated in figure FIG No. 6).

In the illustrated example, leading piercing implement 910 constitutes an integral part of the arms of the automatic unit 930 for applying the bands. As we have already pointed out, automatic equipment for applying the tie bands are manufactured and marketed by several companies, e. g., Panduit and Hellermann - Tyton GmbH.

A typical device includes two clamping arms. Along the arms the band is fed around the body which is intended for being banded with the band (see arms 950 and 955 in figure 9a).

One of the arms may be fitted in such a manner that it would serve as a piercing implement as required at times for piercing holes in the product that is to be marked (in the illustrated example - the meat chunk 920).

Thus, moving the automatic equipment 930 for applying bands in a linear movement towards the meat chunk 920 (in the direction of arrow 940 - see Fig. No. 9a), brings about the piercing by arm 955 of the equipment (see figure 9b), while the other arm - 950, wraps the meat chunk. In other words - the piercing means 955 creates a small perforation in the meat chunk 920. In the open passage made by the piercing means, one arm of the band's wrapping means is introduced. The second arm of the bands wrapping means is made to by-pass the meat chunk or to be also inserted through a second perforation.

Band 960 (see Fig. No. 9c) is applied at this stage, wherein it "encompasses" only a sector of the meat chunk 920 and the automatic device for applying tie bands 930 is drawn backwards in a movement in accordance with the direction of arrow 970.

As aforementioned, we describe the implementation of the invention in reference to the matter of Kashrut, yet any professional in this field will understand that other products can be marked in the same fashion.

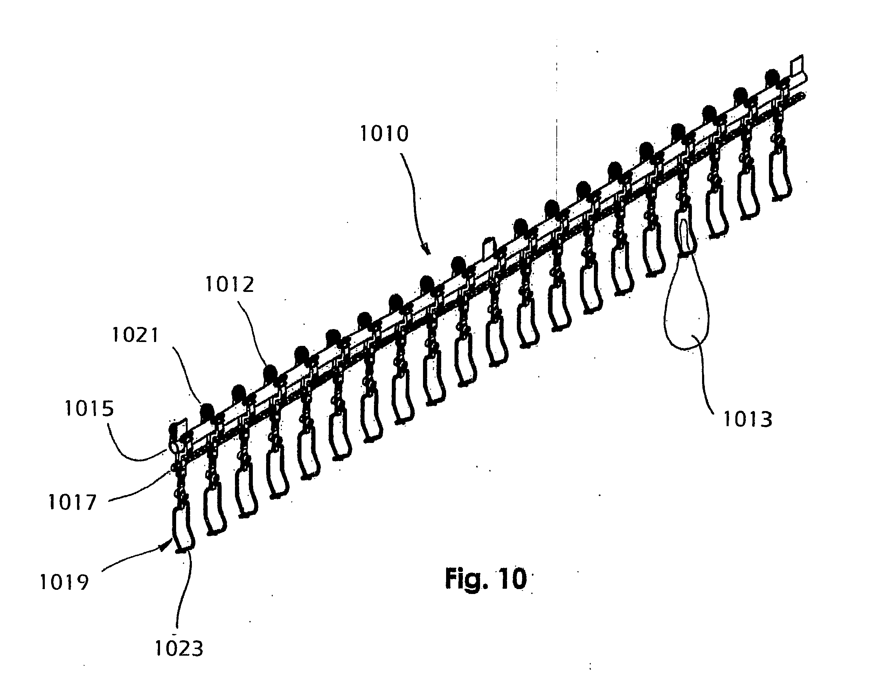

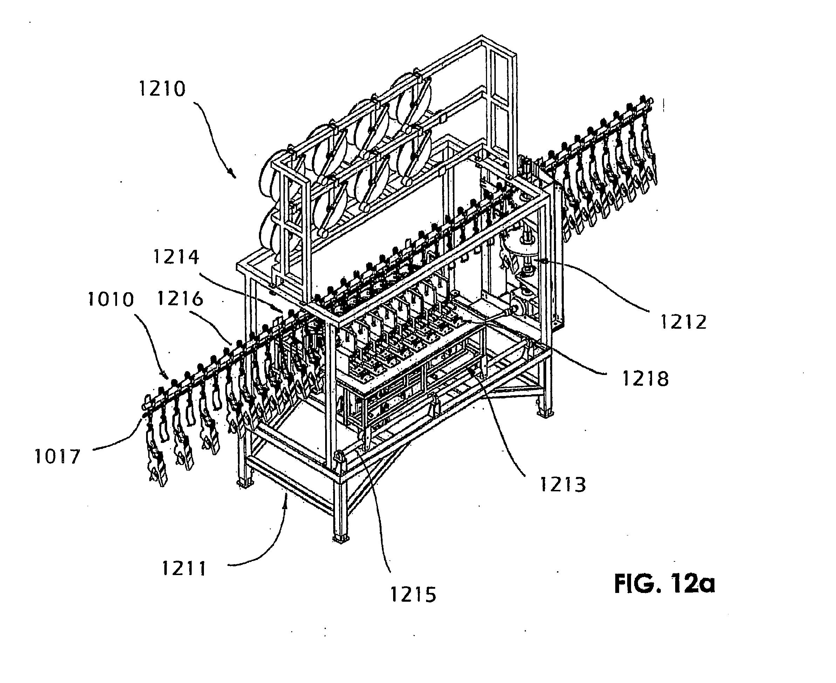

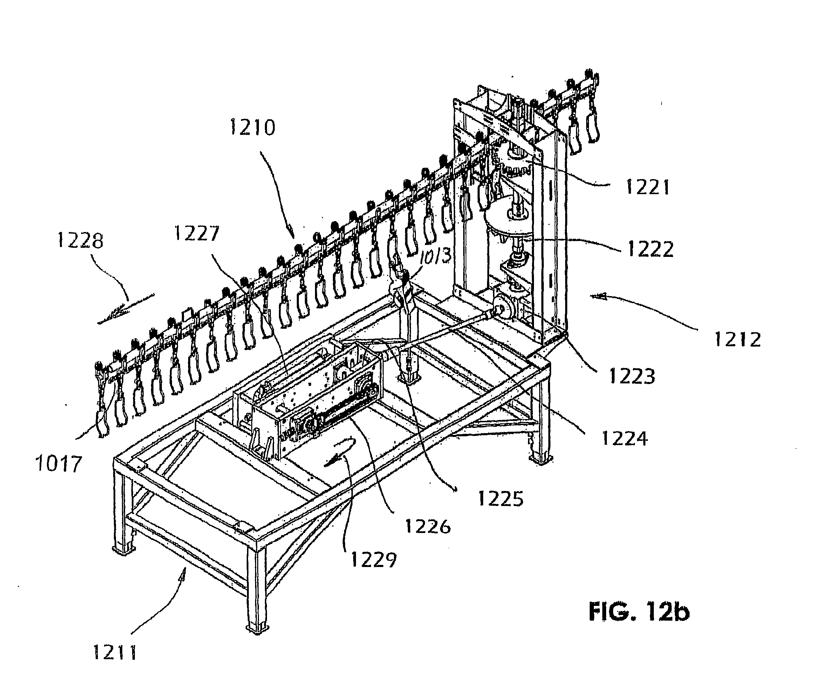

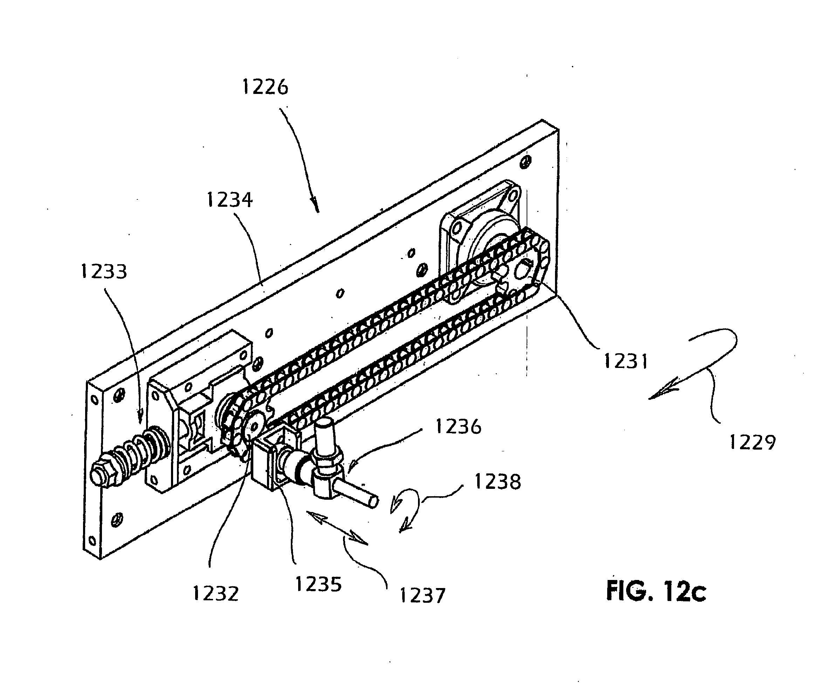

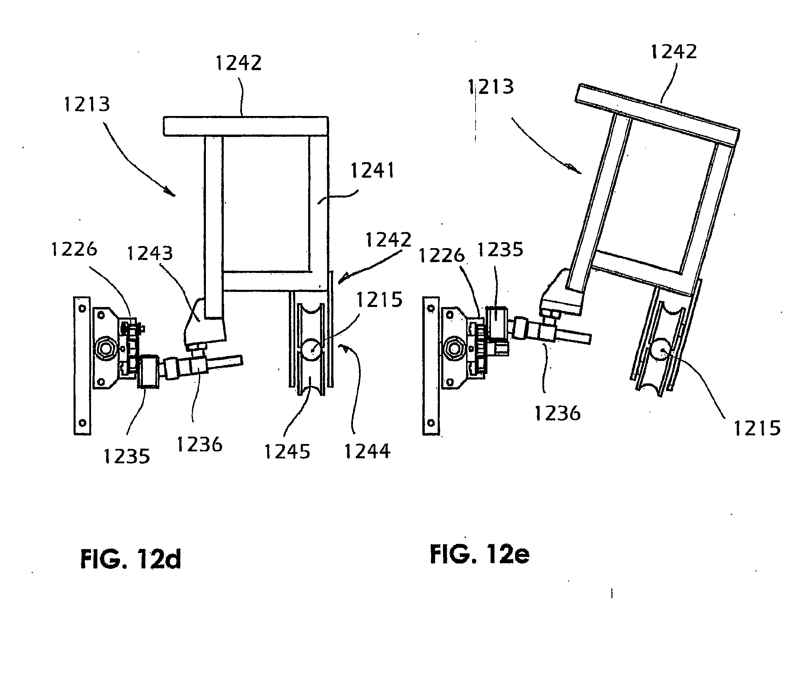

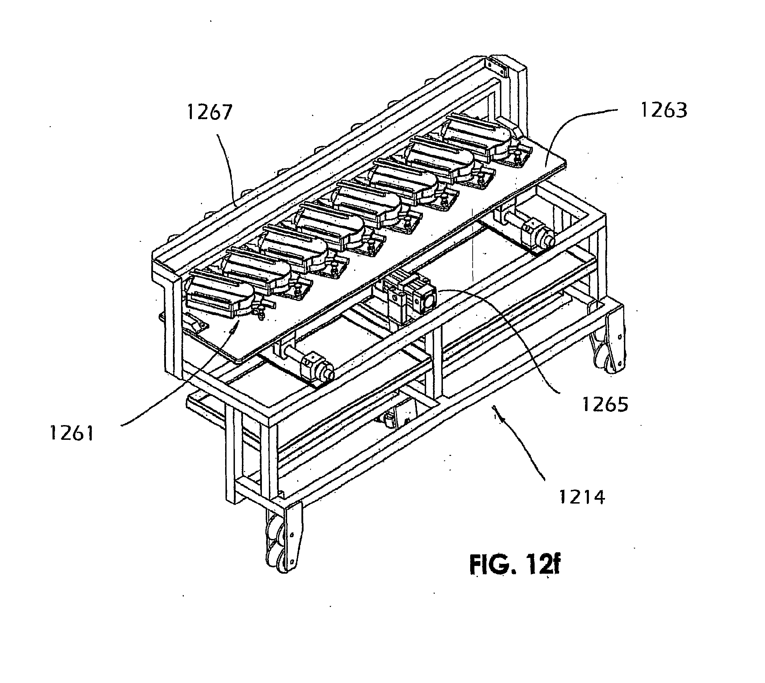

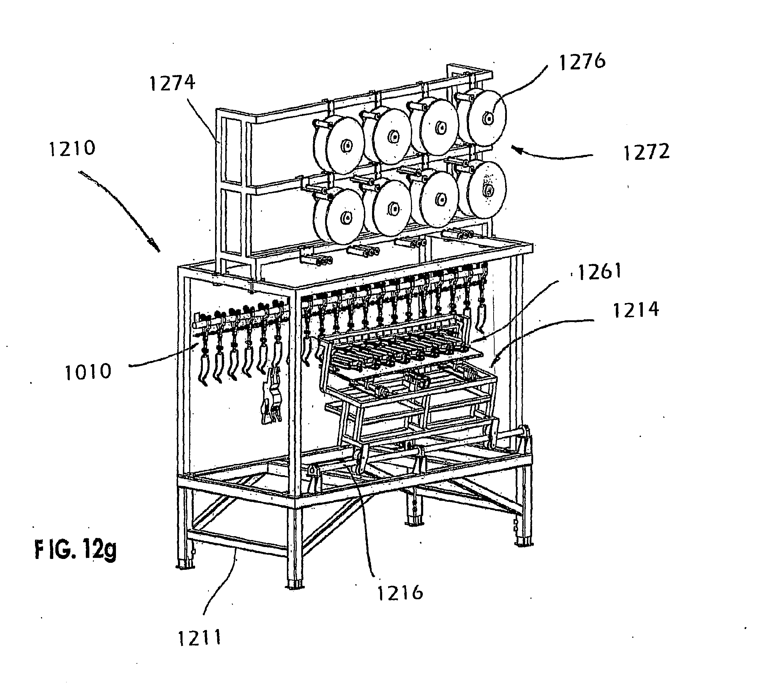

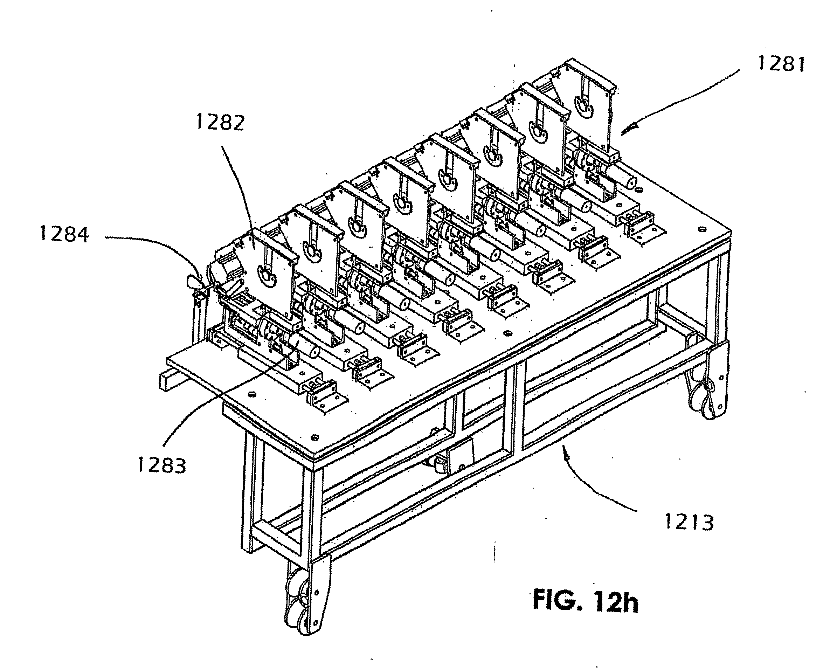

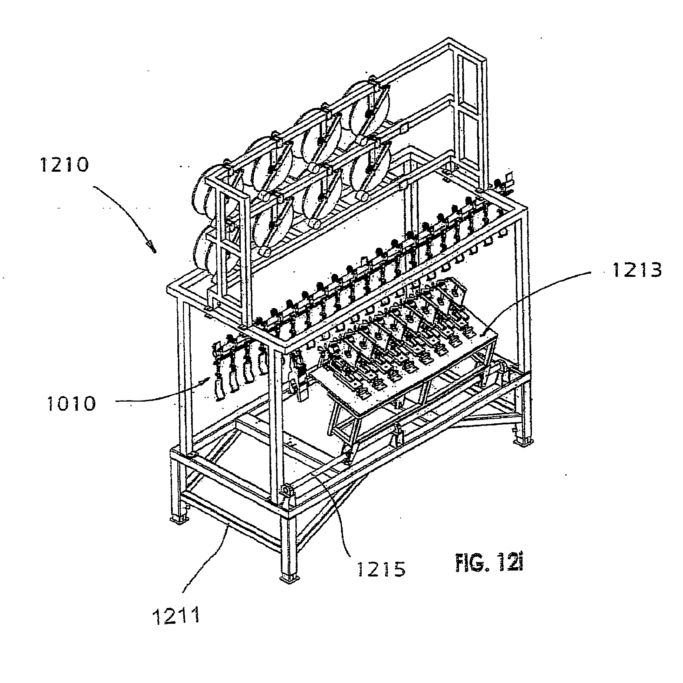

Reference is being made to Figure 10 which provide the necessary background as to the two examples of industrial applicability of the present invention depict in Figures 12 to 15 and 16 respectively.

Figure 10 displays a typical poultry-processing line 1010. Such a processing line includes an endless conveyor 1012 on which the poultry 1013 are hanged. Conveyer 1012 comprises a leading track - pipe profile 1015 in the illustrated example, and a link type of chain 1017 along whose length, at preset defined distances, handling kits, such as trolleys 1019, are connected. Each one of these handling means includes, as shown in the illustrated example, a couple of small pulleys 1021 on bearings, that move on the above mentioned leading track 1015 and a frame (shackle) 1023 for holding the fowl 1013.

Conveyer 1012 is characterized as a "closed, endless track" and includes a propelling means (not illustrated) for driving conveyer's link chain 1017 along leading track 1015. The conveyer's chain moves in a single, unidirectional sense, and its speed is adjusted to match the output production of the plant.

In the examples herein described, we refer to the case of implementing the invention in processing lines for poultry, but obviously any professional skilled in this field would understand, that the invention is also applicable in processing lines of any other kind of meat or similarly fish, wherein the industrial processing of such products are also characterized by the same approach, namely - the products that need to be marked for having certain attributes (for example freshness etc.) are continually moving along a conveyer. The presence of a conveyer - necessary for rendering the process to be mechanized and continuous - will lead any professional in this field to the conclusion that the present invention can be introduce to that process.

Let's revert back to conveyer 1010 illustrated in Fig. No. 10. The movement of the conveyor is not halted, while the poultry's processing tasks (cleansing, plucking, packaging and alike) are being performed at different stations along the line.

Every professional in this field will understand that the task of marking the poultry in accordance with the present invention is naturally time consuming (even if only a short time - binding the band, tightening it and the like). Therefore, the marking function can be performed outside the present poultry processing line 1010 (that is - through halting the conveyor 1012 and performing the marking function, or extracting the poultry 1013 from the line for marking purposes and then returning the marked poultry to the conveyor 1012).

The alternative, and this is the two examples illustrated hereinafter in the depicted Figures 12 to 15 and 16, is integrating within the line's operation and avoiding the need to halt the conveyor in order to mark the poultry on it.

As was mentioned before, marking the poultry in accordance with the invention, is time consuming (binding the band, tightening it and the like). In light of the fact that in the examples, it was decided not to halt conveyor 1012, it becomes apparent that the assemblies that perform the marking function must move along the conveyor and be synchronized with its speed.

In other words - the marking assembles that bind the band around the specific poultry chunk and which tighten it around it, must move alongside the transported poultry while being hanged from conveyor 1012 whose movement continues constantly. Therefore those means are to be propelled simultaneously with the poultry, and must be synchronized with the linear speed of the poultry along the production line, until the marking function is completed.

At present, the normal yield (output) of a production line of a typical poultry processing plant is somewhere between 60 to 90 fowls per minute. The spacing between consecutive handling means (the trolleys) 1019 is rather fixed intervals of a typical order of magnitude of 6" - 8" - 10" - 12" to accommodate various sizes of fowl.

Any professional skilled in this field would immediately understand that by product of these two values gives the linear movement speed of the conveyer chain 1017. For example, if we are referring to a conveyers whose trolleys 1019 are spaced at distances of 6" one from the other, and the desired yield of this processed fowls production line is 60 fowls per minute, then - the line speed has to be 360" per minute. It is fit to remark here, that local variations in line speed do occur at random (due to, for example, variations in the tension of the chain, wear, varying load and friction).

Therefore the marking assemblies in accordance with the invention, when they are automatically operated, must function in absolute synchronization with the assigned speed. In other words, the marking equipment must be capable to mark tens of fowls per minute and operate at the real time rate and efficiency as the production line (considering the actual speed of the conveyer as it is actually running).

In the two examples of arrays illustrated in Figures 12 to 15 and 16, the implementation of the marking tags on the poultry is integrated within the processing line, and this - through obtaining the propulsion drive power directly from the conveyor chain 1017 and through direct synchronization with the conveyor's movement.

Every professional in this field will understand that there are also other options available in order to achieve such synchronization. For example - implementing the marking tags on the poultry while moving along the line using auxillary propulsion and external synchronization with the conveyor's speed (for example - a robot that follows the conveyor's movement, using an extrinsic synchronization controller). Another possibility for implementing the invention, is by "enslaving" the speed of the conveyer to the speed of the marking assembly.

A manipulator, or a robotics arm endowed with feedback and control properties, might be susceptible to and harmed by the high humidity conditions prevailing in meat or fish food products processing, and renders the normal operation of electric and electronic equipment to be difficult. Hence, a preferred solution for establishing and maintaining the synchronization between the marking process and the movement of the production line, would be to resort to a mechanical approach, but in any case, the present invention is not limited to a single method nor to the said mechanical solutions presented herein.

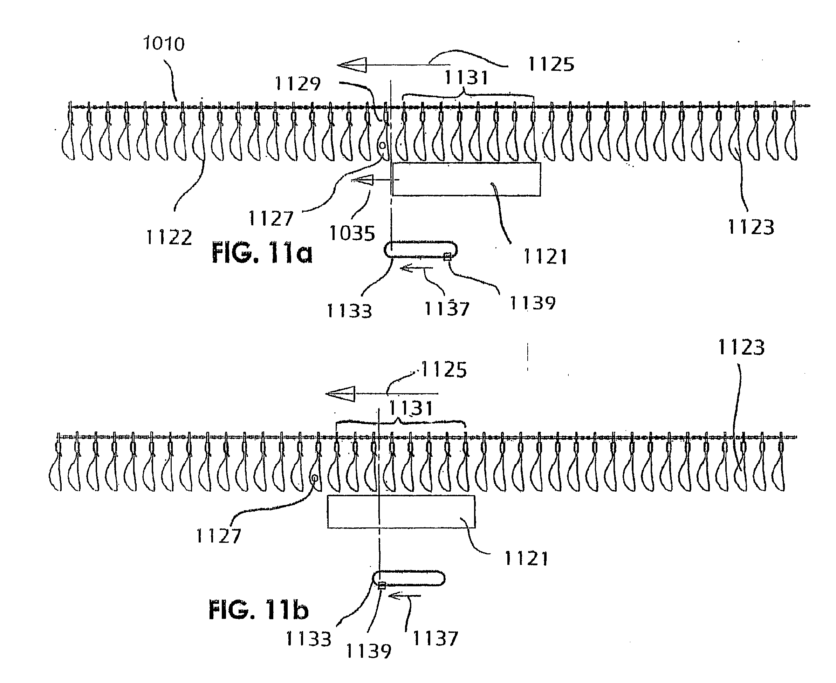

Let's refer to Figures 11a to 11d. the figures describe - just schematically, a general, conceptual example of one idea of a manner by which it is possible to interlace into the continuous, non ending movement of the processing line 1110, which is a production line of the type described above when referring to Figure No. 10, in order to mark the items in accordance with the invention.

A dominant and main characteristic feature of the example presented in the figures is the applied synchronized movement of the marking assemblies, illustrated schematically and depicting 1121, alongside the poultry 1122 transported by conveyor 1123.

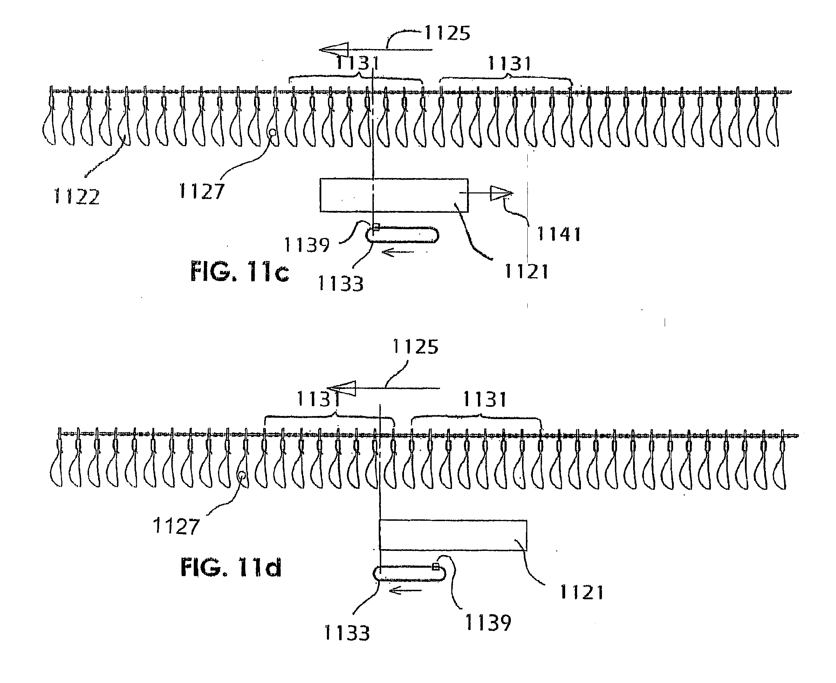

Figure 11 a describes, schematically, the fowls 1122 as they are driven in the direction of arrow 1125. Fowl 1127 (also marked by a point in it) constitutes the last fowl that has already been marked by band (cable tie) 1129, in accordance with the invention. Obviously this fowl, as well as all the fowls to its left (that passed earlier) are by now marked with bands.

At the specific instant in time that is illustrated by Figure 11a, marking assemblies 1121 are engaging a group of fowls 1131 (eight in the illustrated example), in order to be marked while travelling in the direction of arrow 1125.

Propulsion system 1133 drives marking assemblies 1121 to move in the direction of arrow 1135 (in parallel to the movement of conveyer 1123 and under synchronization with its moving velocity).

In the illustrated example, propulsion system 1133 is described as a cyclical chain drive that is driven in the direction of arrow 1137 and budges reference point 1139 located on its surface.

Considering the mechanical aspect, note that reference point 1139 is linked with marking assemblies 1121. The nature of this link will be described below, while referring to the Figures 12, figures that depict a specific structure of an array that implements the concept inherent in the present invention.

Figure 11b describes, once more just schematically, the stage at which the marking (applying bands 1129) of the fowls group 1131 was terminated. The marking of the fowls group 1131 (as said, consisting of eight fowls in this illustrated example) is carried out simultaneously with the forward movement of the fowls in the direction of arrow 1125. At the specific instant in time that is descried by Figure 11b, marking assemblies 1121 completed all their tasks as far as handling the fowls group 1131 is considered. At the propulsion system 1133, the reference point 1139 arrived at the end of the course of the endless chain.

Figure 11c describes, schematically, the beginning of the stage in which marking assemblies 1121 are being drawn backwards, in the direction of arrow 1141. At this stage marking assemblies 1121 are being detached from the line of fowls being processed - by employing a suitable mechanism (an example of such possible mechanism would be discussed further below, when referring to the No. 12 group of Figures). It is to be remembered, that also at this stage, the line of fowls 1122 continues to advance persistently in the direction of arrow 1125. Hence, it is necessary to revert the marking assemblies 1121 back to the accurate location at which they would be coupled to the next group of fowls (see 1131') that are not yet marked but intended to be marked at this juncture in time.

Currently, in this illustration, the reference point 1139, after arriving at the end of the endless chain course, reverses its movement's sense and starts its movement backwards in a direction opposed to that of the fowls advancing on the processing line.

Figure 11d now describes schematically, the stage of the termination of the reversed (backward) movement of marking assemblies 1121. At this stage, marking assemblies 1121 are about to be engaged once more to the line of fowls (an act to be provided by a mechanism that will be described later on, when an example would be provided in reference to Figures 12a to 12i), in order to initiate the marking operation for the "next" group of fowls 1131' queuing to be marked. In the propulsion system 1133, the reference point 1139 arrived at the other end of the course on the infinite, endless chain, and it just about to change its direction of movement back to the direction of movement of the line of fowls, namely the one marked by arrow 1125.

Thus, we have shown that the considered procedure is a cyclical one - After the marking task is completed, the marking assemblies 1121 are detached from the poultry group to which they were connected 1131, and in a circular movement, they reconnect to another group of poultry 1131' which is conveyed at that time along the conveyor, in order to mark this group, and so forth.

Any professional skilled in the art would understand, that the concept that was explained above, wherein it is based on the idea of a cyclical chain, might also be implemented by any other kind of a linear cyclical propulsion means (for example, a piston, a screw-like movement drive, etc.).

Let refer to Figures 12a to 12i. The figures illustrate an example of an array 1210 that enables marking fowls (poultry) in accordance with the present invention, using a mechanized and automated manner, while integrating it into an existing procedure for processing the poultry. In other words - array 1210 enables its installation as an "add on" configuration - as an addition to a regular fowls food processing line, one similar to-the one 1010 described above when reference been made to Figure 10.

Because of the similarity and in order to prevent confusion (e. g., different numbers for equal parts), it was decided for clarity that the existing processing line will be- illustrated in a manner similar to that of Figure No. 10, and its components were denoted by the same numbers as those marked in the original Figure 10.

Let us refer now to figure 12a, which presents a perspective general view of array 1210. Array 1210 includes a dedicated structural construction 1211 (hereinafter "the structure") that enables the integration of array 1210 as an "add-on" configuration upon the existing poultry products production line 1010, without changing the structure of the line.

Propulsion system 1212 is installed upon the structure 1211. Propulsion system 1212 drives two carriages, 1213 and 1214, respectively, expressed by a cyclical movement that is essentially parallel in its direction to the movement direction of the original chain 1017 of the poultry processing line. The cyclical movement of the two carriages, 1213 and 1214, is taking place upon lengthwise axes 1215 and 1216, respectively. These lengthwise axes 1215 and 1216 constitute a component of the structure 1211 and their directions are parallel to the movement direction of chain 1017 of the poultry processing line. Upon each of carriages 1213 and 1214, the marking assemblies 1218 are mounted.

Pursuant to the detailed explanation provided above, it may be envisaged that any professional in this field would understand, that array 1210 does indeed implement, by its structure and operation mode, the concept that was described above when reference was made to Figures 11a to 11d.

Figure 12b presents a general perspective view of the propulsion system 1212 (for the sake of clarity the carriages and marking assemblies are not illustrated). In the given specific configuration depicted in the figures, propulsion system 1212 that drives the marking assemblies 1218 receives its locomotion power from the conveyer's chain 1017 (in a manner to be described further below). In other words - marking the poultry is taken place while mobilizing the marking assemblies to move alongside the poultry; for this end, propulsion power is obtained from the same conveyor that transports the poultry and the movement is synchronized with it.

Figure 12b displays propulsion system 1212 that is implemented for obtaining the propulsion directly from the conveyor chain 1017. As aforementioned, in this example, it was decided to select the option of propelling the marking assemblies 1218 along conveyor 1010 by obtaining propulsion from the conveyor chain 1017 and thus directly synchronizing with it.

A typical conveyor at a poultry processing plant is driven through a chain 1017 made of links. The fact that the poultry intended to be marked are hanged at fixed intervals, in accordance with the structure of the chain, enables to automatically gain synchronization of the marking assemblies in accordance with the motion of the chain.

A cog wheel 1221 meshes with chain 1017 links and from this chain it draws propulsion and achieves synchronization for the marking function purposes as specified hereinafter. Every professional in this field understands, that when referring to a conveyor chain having a different spaces (intervals) steps, it will be possible to replace the cog wheel with a different compatible wheel (in accordance with the specific chain structure).

In operation, chain 1017 movement forces cog wheel 1221 to rotate at a rotational speed that is determined by chain 1017 linear speed. Cog wheel 1221 propels an axis 1222 that transfers rotational movement to a first transmission gear 1223. Transmission gear 1223 deflects the movement direction by approximately 90 degrees and transfers the propulsion power to a trunnion axis 1224. trunnion axis 1224 transfers the motion (movement) to a second transmission gear 1225. This transmission 1225 splits the motion into two opposing directions, both substantially perpendicular to the trunnion's axis. Gear 1225 causes the driving of two cyclical chains 1226 and 1227 that are located in parallel one to each other (cyclical chain 1227 is hidden this figure). Each one of the two cyclical chains 1226 and 1227 is located on a structure 1211, on the two flanks of conveyer 1010, under it and parallel to it. Chains 1226 and 1227 are identical (have exactly the same dimensions) and move in the same direction.

Any professional skilled in this field would understand, that by employing the propulsion system described above, it is possible to transfer the power and the speed of the chain conveyer 1017 to the two cyclical chains 1226 and 1227. Thus, the endless motion of chain 1017 in the direction of arrow 1228, wherein on the trolleys 1019 there are hanged fowls (see for example fowl 1013 that was illustrated for providing an example) this motion is transferred to the cyclical chains 1226 and 1227 that are drive to rotate they too - in an endless motion - in the direction of arrow 1229.

Figure 12c constitutes a close up perspective view, of a typical cyclical chain, in this case - chain 1226. Note that as cited above, chains 1226 and 1227 are identical in both their dimensions and their direction of movement, and hence we can make do by providing the sequence of operation of solely a single chain (say 1226).

Chain 1226 is positioned so that it is stretched between two tooth wheels 1231 and 1232. Tooth wheel 1231 is a driving tooth wheel. Wheel 1231 itself is driven to rotate around its axis, by a second transmission (gear) 1225 (see above, where reference is made to Figure.12b). The rotation of toot wheel 1231 in the direction of arrow 1229 results in the rotation of the cyclical chain in the same direction, in an endless, continuous motion around the two tooth wheels. A stretching mechanism 1233 is coupled to tooth wheel 1232, which is a tension wheel, and enables stretching the chain in a manner that is familiar and clear to any professional skilled in the subjects of propulsion by chains. The whole set up, is positioned - in the illustrated example - on a base plate 1234 that is anchored in the assembly unto the structure 1211 (not illustrated here, see figures 12a and 12b).

Unto one of the links of chain 1226, a bracket 1235 is secured. It moves with the chain in its endless course (see and compare with the reference point 1139 discussed earlier and presented in the sequence of Figures 11a to 11d),

Bracket 1235 is engaged by coupling assembly 1236. The coupling between bracket 1235 and coupling assembly 1236 has two degrees of freedom - the coupling assembly can move inwards and outwards relative to bracket 1235 (in the directions of arrows 1237), and it can rotate, in a to a limited degree (in the direction of arrows 1238). Later on, we shall elaborate and discuss the mode of operation of coupling assembly 1236 - when referring to Figures 12d and 12e.

Figures 12d and 12e constitute a side view of a typical carriage, being one of the two carriages 1213 and 1214 that are installed in system 1210. The manner by which they are connected to propulsion system 1212 is also shown, as well as the connections to the structure 1211 (see also Figure 12a). Note that from the point of view of their coupling and with regard to the manner they are connected to propulsion system 1212 and to structure 1211, the two carriages are similar each one to the other, hence it suffices to discuss and describe the structure and operation mode of only one of them (say 1213).

Carriage 1213 is made up of a construction implemented by profiles 1241. Upon this construction 1241 of profiles, on its upper part, a work surface 1242 is installed. The marking assemblies 1218 (that are not illustrated) are mounted on this work surface plate. Bracket 1243 is positioned on the one side of profiles' construction 1241, at its bottom. The coupling assembly 1236 is secured unto bracket 1243 (for example, by screws) see above, within the reference to Figure 12c. Also at the bottom, on the other side of the construction (this location is denoted 1242 in the figure) a rotateable sliding bearing 1244 is mounted (two such bearings are mounted along the carriage). The structure of bearing 1244 is characterized by a couple of wheels 1245. The wheels 1245 envelopes the lengthwise axis 1215 (see above, where reference is made to Figure 12a), in a manner that enables the rotation of the bearing around the axis.

Carriage 1213 is illustrated in Figure No. 12d in a state in which the coupling assembly 1236 (that is secured via bracket 1235 unto one of the links of chain 1226), is situated at its bottom state. This means that, if we look again at Figures 12b and 12c, and by referring to the direction of the chain's movement that was marked by an arrow 1229, this is the state of affairs at which bracket 1235 is moving at the bottom "straight" section of chain 1226, in a direction that is from tooth wheel 1231 to tooth wheel 1232 (see and compare to the reference point 1139 in Figures 11a and 11b).

This juncture describes a work stroke (beat) - during the duration of this beat the complete cycle of marking, in accordance with the method described in the invention, is executed. The direction of movement of carriage 1213 is in parallel to the conveyer's chain 1017, where its work surface 1242 is horizontal and its speed of advancement is identical to the speed of the conveyer's chain 1017. Under these conditions, there is no relative movement state between the work surface 1242 and the fowls that are intended to be marked, and they are one alongside the other in a (virtual) stand still.

On the other hand, note that in Figure 12e carriage 1213 is illustrated at the state in which the coupling assembly 1236 (that is secured via bracket 1235 unto one of the links of chain 1226), is situated at its upper state. This means that, if we look again at Figures 12b and 12c, and by referring to the direction of the chain's movement that was marked by the arrow 1229, this is the state of affairs at which bracket 1235 is moving at the upper straight section of chain 1226, in a direction that is from tooth wheel 1232 to tooth wheel 1231 (see and compare to the reference point 1139 in Figures 11c and 11d).

This situation describes an idle beat (stroke) - during the duration of this beat the rotation of the cyclical chain 1226 and bracket 1235 around tooth wheel 1232 (see Figure 12c), caused the pushing of coupling assembly 1236 in a relative motion along a vertical upwards direction. This vertical motion brings about the rotation of carriage 1213 in a relative movement around axis 1215. At this juncture of time, the conditions illustrated in Figure 12e depict a carriage that is moving in a direction opposing that of the direction of movement of the conveyer's chain 1017. The work surface 1242 is tilted in an outward direction, namely in a direction that leads it to become detached from the fowls and moving away from them.

As we stressed earlier, the automatic marking array 1210 for marking fowls by applying bands (tie cables) in accordance with the present invention, is attached as an "add on" array to the regular chain conveyer 1010 of the plant for processing poultry and operates continuously concurrently with it. So far we have shown the manner by which the automatic array might be attached to the conveyer's chain, and this with absolute synchronization with it, while in addition it also obtains its operation power from it.

Simultaneously, the yield (through put) of the fowls processing line might be, for example, 60 fowls per minute, whereas the act of marking the fowls by applying a band - and even more pronounced, when in addition, one would also desire to weld holograms to the band simultaneously and on line during the process, are operations that require longer times. So for example, it was found that implementing the procedure which we presented and described above, in referring to Figures 8a to 8g, requires 2 to 3 seconds (when executed using existing equipment - such as an automatic device for wrapping bands, an ultra sonic welder, etc). From this it is derived, that one would need to operate, theoretically, three marking assemblies working in parallel in order to comply with the rate of production (60 fowls per minute, cited above) as dictated by the example just given.

In the automatic marking array 1210 described when referring to Figures 12a to 12e, the requirement to have the rate of marking fowls to be equal to that of line 1010 processing, was actually solved by implementing a mechanical manner. The array implements a cyclical operation that is performed at a constant speed, this being achieved by relying on the speed of the conveyer 1010 which drives the cyclical chains 1226 and 1227, while maintaining a 1:1 transmission ratio.

The course of the cyclical chains is defined by the cog wheels mounted at their ends (see Figures 12b and 12c), and hence each cycle of the chain is made up of four beats. As we have explained above, the upper horizontal sector is an idle beat, and there are also in addition two "transfer beats" (when the reference point 1139 passes around the circumference of the tooth wheels in a radial motion.

Under these circumstances, the length of the bona fide operational (actual work) beat is approximately only 40% of the total length of the complete cycle.

From this we derive that in the example given for array 1210, there exists a discrepancy between the theoretical calculation, that calls, as said, for simultaneously operating of three marking assemblies, and the fact that these three marking assemblies would actually suffice, at most, for accomplishing (marking) only 40% of the fowls.

Hence, in order to be able to conform with the required tempo of the processing in the line, for the configuration of array 1210 that is given only as an example, it is to required to activate simultaneously (in parallel) seven to eight markings assemblies.

In passing we would like to comment, that any professional skilled in this field would understand, that in array 1210, in view of the 1:1 transmission ratio that is maintained in the propulsion system 1212, then the length of each of the cyclical chains 1226 and 1227, is substantially equal to the length of the sector in chain 1017 on which there are riding the group of fowls that are simultaneously treated by the marking assemblies. This must be so, because each time the cyclical chains complete a whole cycle, all the fowls that hang on this sector, receive the assigned marking.

For example (see Figure No. 10), if the spaces between consecutive trolleys 1019 along chain 1017 is 6" -and the number of marking assemblies operating in tandem is 8, then the length of the sector upon which the marking operation is taking place in accordance with the invention should be 48", which is also should be the length of each of the two cyclical chains 1226 and 1227.

Each of the two cyclical chains 1226 and 1227 drive, as stated earlier, a carriage - 1213 and 1214, respectively, one each on each side of conveyer 1010. As will be clarify hereinafter, Each carriage carries part of the equipment required for performing the marking in accordance with the invention, and as well - all the accessories and materials required for the job.

Figure 12f constitutes a perspective view of carriage 1214 wherein upon its work surface the automatic devices 1261 for connecting the bands are mounted (8 units in the illustrated example). These devices 1261 are mounted one next to the other with spaces matching the intervals between the shackles 1023 on the converer's chain 1017 (see Figure 10) During the proceedings of each work beat, each device is assigned to wrap one band around one product. Devices 1261 are installed upon a mobile surface 1263 movable by the action of a piston 1265 in a direction perpendicular to the direction of the conveyer.

Operating the devices entails direct contact with the poultry and the use of force. Therefore, the poultry must be stabilized in order to reach an unequivocal position. To achieve that, the movement of carriages 1213 and 1214 toward the poultry group, tightens the fowls and stabilizes them until the function of binding the band and welding the hologram to their back is completed. Tightening and stabilizing the poultry is achieved by stabilizing shackles 1023 on which the poultry are hanged, therefore preventing the poultry from moving. A profile 1267 which is attached to carriage 1214 gathers the group of shackles and stabilized them relatively to the carriage. Thus preventing any swaying of the poultry in the direction of their movement. And that is as long as the marking process was not yet been completed and as long as the carriage did not detach and return back.

Figure 12g depicts a perspective view of solely one carriage (1214), shown here in the manner it is installed in array 1210. In the illustration, carriage 1214 is shown in the phase at which it is staying at the idle beat - detached at a distance away from the poultry processing and wherein it is tilted relative to the poultry products processing line around length wise axis 1216.

A routing system 1272 leads and stabilizes the roll of bands (not seen in the illustration), in their motion towards the automatic marking devices 1261 used to secure the bands to the fowls. The routing system includes a structure 1274 affixed upon construction structure 1211, and on its top there are rolls with bands 1276, one each for every marking device 1261 (eight in the illustrated example for our case). The bands carrying rolls feed the automatic marking devices 1261. The bands' chains are unloaded from the rolls and make their way downwards toward the automatic devices1261 while the automatic devices move left and right, in accordance with the location of carriage 1214.

Figure 12h depicts a perspective view of carriage 1213, wherein on its work surface eight integrated systems 1281 of means 1282 for feeding the marking tags are mounted, as well as for example ultra sonic welding means 1283 and support anvil means 1284.

The integrated systems are installed one alongside the other, with their spacing adjusted to fit the distances between the shackles 1023 located on the conveyer's chain 1017 (see Figure 10). During each operation ("work") beat, each integrated system is intended to weld a hologram unto one band.

Figure 12i depicts perspective view of another one only carriage 1213, as it is installed in array 1210. carriage 1213 is illustrated as its is found in an idle beat - some distance away from the fowls processing line 1010, wherein it is tilted around the lengthwise axis 1215.

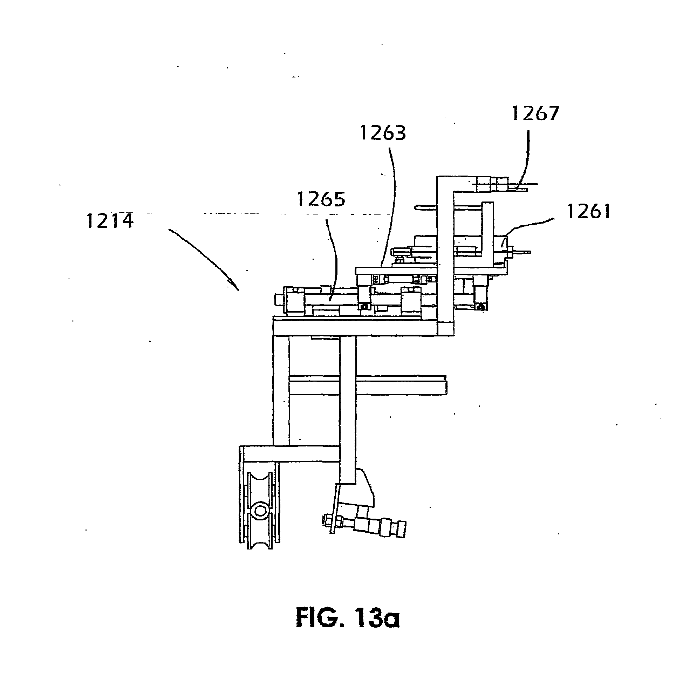

Let us refer to Figure 13a. Carriage 1214 is seen once more in the work beat state. At this stage, the current poultry (or group of poultry in the case of carriages that hold several marking assemblies on their back), slides along the conveyor, into the area from which it is accompanied by the carriages at a linear speed which is substantially equal to the poultry's linear speed. The carriage moves in a mode wherein its work surface is horizontal and its speed is substantially identical with that of the conveyer's chain. In this state, profile component 1267 is coupled to the chain's shackles and stabilizes the trolleys on which the fowls are hanged. Piston 1265 drives the mobile surface 1263 and brings the automatic bands connecting devices 1261 positioned on them towards the group of fowls.At this stage, each device's arms, grasp the poultry, bind the band in a loop around the fowl and around the anvil, threading the free end into the springy clip, and the band is then tightened around the fowl and the anvil. Finally, the excess band's material remainder is trimmed.

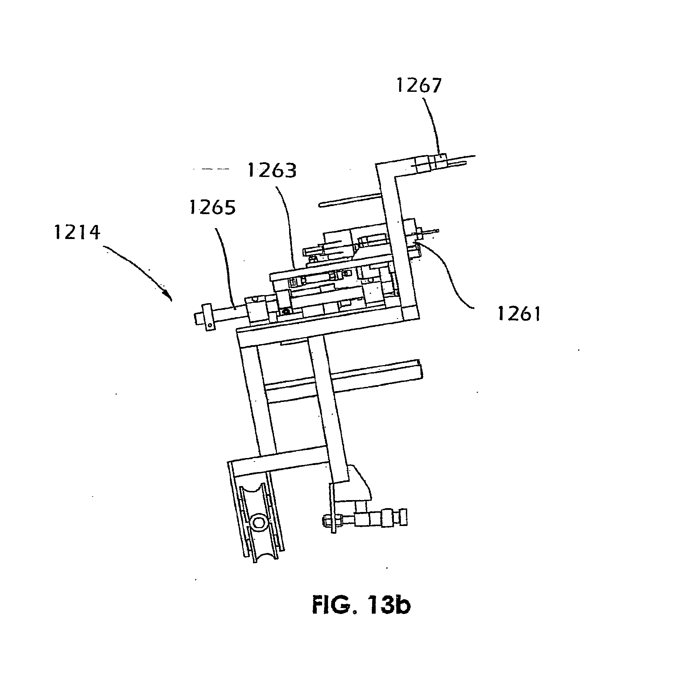

In Figure 13b, carriage 1214 is illustrated at the idle beat - the carriage moves in an opposite direction to the movement direction of the conveyer's chain while its work surface tilted outwards. In this state, we find that profile 1267 was released from the holding shackles. Piston 1265 drives the mobile surface 1263 and moves (pushes) the automatic devices 1261 for coupling bands, away from the fowls' movement plains.

Any professional in this field would understand, that the stage of wrapping the band, might possibly be preceded by a stage of piercing and inserting the piercing means into the meat chunk to be marked. In this manner. It is possible to mechanize and impart complete automation also to the marking in the configuration that we presented above when referring to Figures 9a - 9c. Piston 1265 can be used as the driving power for the piercing spikes ("needles") operation. Namely, by using array 1210, it is possible to mark meat chunks by a marking tag in accordance with the invention, that will be stuck in the meat chunk and wrapped around a part of the chunk and not around its full circumference. Obviously, advanced preparation of bands with holograms already bonded to them would prevent the need for performing the holograms welding while the conveyer is in motion.

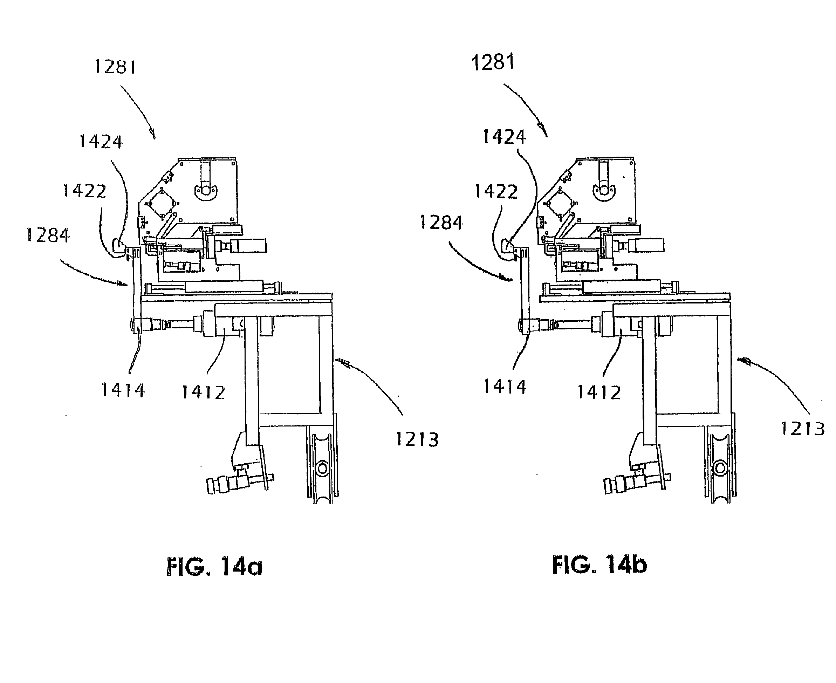

We refer to Figures 14a to 14h. These figures describe, by side views illustrations, the process of the feeding means delivering the marking tags 1282 (for example - holograms), welding means 1283 and the anvil means 1284, in the manner they are implemented in an array in accordance with Figures 12a to 12i.

In figures 14a to 14d, carriage 1213 is depicted in a work beat state - the carriage moves wherein its work surface is horizontal and its speed essentially identical with that of the conveyer's chain. In this state, piston 1412 drives the ruler 1414 upon which the anvil means (one for each array) are mounted, in a linear motion (see Figure 14b). Each anvil means 1284, includes an anvil pole 1422 that is brought to contact with the fowl on which the marking operation is performed at that time, and two surfaces 1424 (see also Figure 12g), that are also being coupled to the shackle and perform similar function as profile 1267 in carriage 1214 - stabilizes the trolley upon which the fowl being marked is mounted.

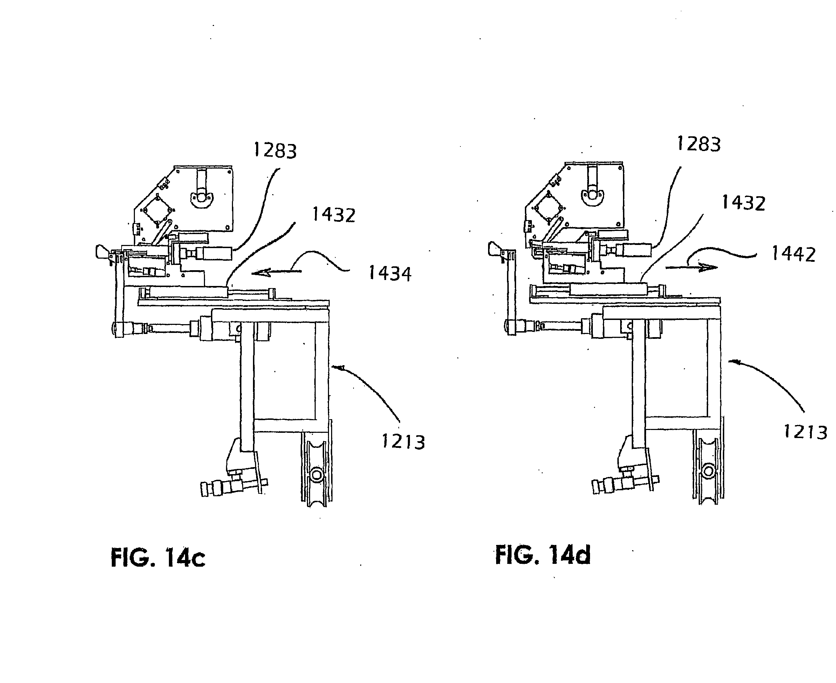

At this stage, piston 1432 (see Figure 14c) drives the welding means 1283 in the direction of the arrow designated 1434 - towards the fowl intended to be marked.

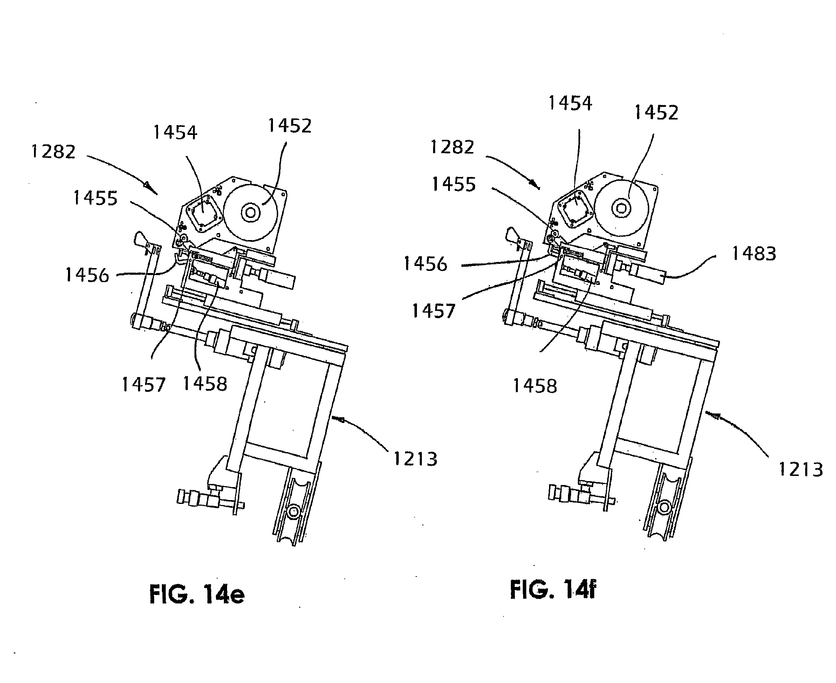

Later on (see Figure 14d), and still within the framework of the work beat, piston 1432 retreats welding means 1283 backwards - in the direction of the arrow marked 1442 - after it has finished to perform the welding of the hologram (see further below when referring to Figures 14e to 14h).

The feeding action of the marking tags (for example, holograms) is seen in Figures 14e to 14h. The feeding action takes place during the idle beat time of carriage 1213, namely during the movement in which carriage 1213 is moving in an opposed direction to that of the conveyer's chain movement, wherein the work surface is tilted outwards. During the period of the idle beat, the feeding of the marking tags is performed.

Feeding means 1282 includes a roll 1452 carrying a continuous holograms strip (not shown). The holograms' strip is being advances in a controlled manner by a step motor 1454 that drives a propulsion roll 1455.

Timing and motion control of the movement provided by the step motor 1454 is performed by the process controller in a manner that is known and clear to every professional in the control discipline. The skilled professional would also understand that utilizing a step motor, enables also the incorporation of an optical locator kit, that identifies the boundaries of the tag through recognizing an identifying indication stamped on it.

With the advancement of the holograms strip, its leading edge arrives to the proximity of gripper arm 1456. Gripper arm 1456 is adjusted to turn around a rotation axis 1457 by a piston 1458.

Consider now Figure 14f. During the stage that is described by this figure, which also takes place during the movement of carriage 1213 in its idle beat period, the ready hologram is first positioned against the tip of welding means 1283. Piston 1458 is then actuated and turns gripper's arm 1456 around axis 1457, so that it would hold the leading edge of the holograms strip, against the tip of welding means 1283.

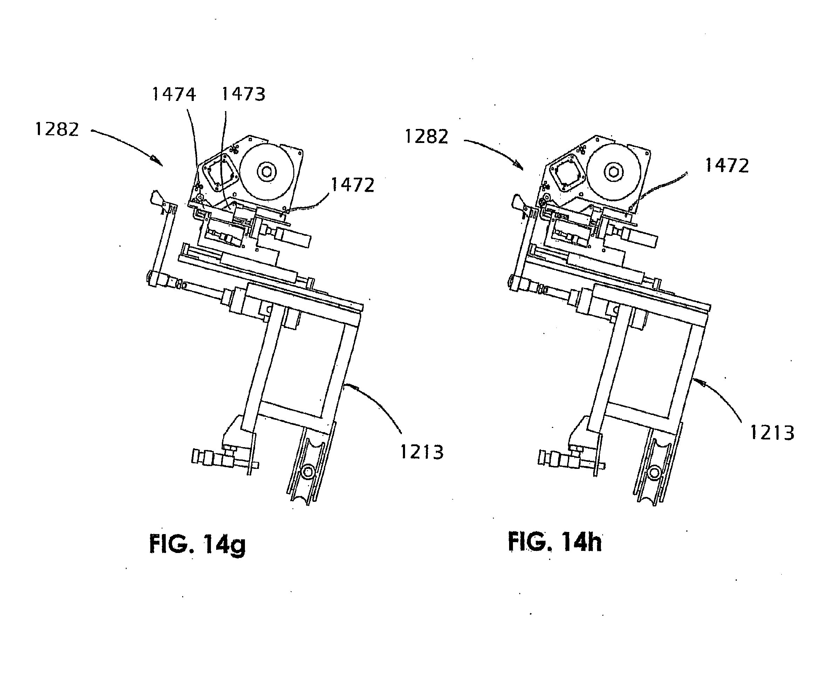

Let us refer to Figure 14g. During this stage, that also takes place during the idle beat sequence movement of carriage 1213, the cutting and separation of the attendant hologram from the holograms strip is executed. At this stage the holograms' feeding means 1282 cuts out the current hologram from the prepared holograms' strip and prepares it to be delivered to the attachment point. Piston 1472 is activated and advances an arm 1473 attached to knife 1474 that cuts the holograms strip so that the attendant hologram is separated from the strip and remains fixed against the tip of welder means 1283.

Consider now Figure 14h, piston 1472 retreat and at this stage a sequence of feeding operations, closing the gripper and cutting was performed. The sequence loads a new tag unto the welder means, tag having a defined length and held by the gripper's arm 1456 against the tip of welder means 1283.

At this stage the working beat started (see Figures 14a to 14d). Carriage 1213 moves when its work surface is horizontal and its speed is identical to that of the conveyer's chain. At this stage, piston 1432 advances welder means 1283 wherein in its tip the tag is held by the gripper's arm 1456, unto the fowl intended to be marked (not illustrated). When contact is made between the tag and the band, the tag and the band are pressed between the anvil's pole 1422 (see Figure 14c) to the end tip of welder means 1283. Through the operation of the array controller (not shown), the welder means is activated and an ultra sonic energy causes the coupling of the tag to the band by welding (in accordance with the example explained above).

At this stage, after welding the tag to the band, piston 1458 opens the gripper and the welder means is retreated backwards - piston 1432 removes it away from the shackles and the marked fowl.

At this stage, carriages 1213 and 1214 arrived at the end of the work beat and they change their direction of movement to the direction that is opposite to the movement direction of the conveyer's chain, wherein their work surfaces are tilted outwards while they are moving away from the fowls production line (to the state that is illustrated: for carriage 1214, in Figures 12g and 13b and for carriage 1213, in Figures 12i and 14e).

In order to soften somewhat the passage between the two directions, (from the termination of the work beat to the beginning of the idle beat, and from the termination of the idle beat to the beginning of the work beat), it is feasible to install auxiliary pistons (not illustrated) that assist the vertical ascend of the carriages by providing compressed air flow that serve also as shock absorbers when they are moving downwards.

Tilting carriage 1213, does also extract anvil's pole 1422 (see Figure 14b) from the band, which remains connected to the fowl and carries a tag on it. That is to say, extracting the anvil from the band might be a by product of the method of propulsion, as explained - by the cyclical chains, a method that ensures a unequivocal mechanical connection between the conveyer's speed to the motion speed of the carriages that move alongside it, and thus there is no need for external control for monitoring the extraction of the anvil from the between the band and the marked product.

Any professional skilled in this field would understand, that implementing the marking of fowls in accordance with the invention might be obtained by diverse means and methods.

Any professional in this domain would also appreciate that adding an automatic system for marking products in accordance with the example illustrated in figures 12 to 14, entails the requirement for an industrial control system that would see to proper timing of the marking operation on the product that is moving all the while with the conveyer advancement. With reference made to the example of array 1210 that is illustrated in figures 12 to 14, it is surmised that any professional in this field would understand, that propulsion system 1212 is a mechanical one, that is enslaved to the movement of conveyer 1010 that does exit (already) in a line for processing poultry, and hence it does not require a control unit.

On the other hand, the operations of the automatic devices for connecting the bands, the feeding means of the holograms, and the welding means of said holograms to the bands, does indeed mandate control in order to prevent waste. Frequently, unwelcome gaps between products (e.g. - fowls) are formed on the conveyer, for example a delay in hanging/positioning fowls on the shackle, and the shackle would continue to move in its motion.

Hence, in order to prevent automatic "attack" of the empty shackle by a band and a hologram, it is necessary to detect the empty shackle and its location well in advance.

Any professional in this field would understand, that "detection", as said, would enable a control system based on a computerized controller, to stop the operation of the relevant automatic piece of equipment for feeding bands, the specific step motor of feeding holograms and the ultra sonic welder that would otherwise be facing an empty shackle, and thus prevent waste.

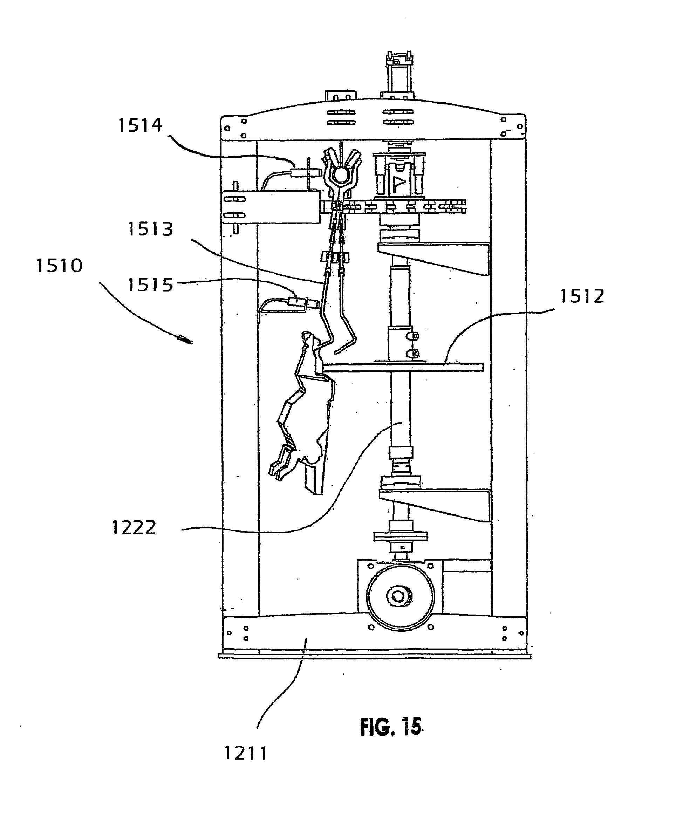

Figure 15 is an illustration of an example of a control device 1510 as it is installed in the array in accordance with Figures 12a to 12i, for detecting the existence of a product on the line, as well as its location.

Wheel 1512 is located on a common axis 1222 of propulsion system 1212 (see Figure 12b). Hence wheel 1512 turns at an angular velocity that was fixed by the speed of conveyer 1010 (see Figure 10). The dimensions of wheel 1512 and its relevant position causes a sidewise movement of the fowls passing him along. The fowl hits wheel 1512 and deflects the angle at which the shackle is hanged (see in the figure, shackle 1513). First proximity sensor 1514 that is located on structure 1211 (see Figure 12a), detects all the shackles that pass in front of it (whether there is a fowl hanging there or not). In contra distinction, second proximity sensor 1515 only detects a shackle whose angle was tilted, namely a shackle carrying a fowl.

Any professional skilled in the control field would understand, that the comparison of the indications received from the two sensors would enable a computerized controller to activate a system of marking, feeding and specific welding in accordance with there being / not being a fowl in the controllers sensing.

Array 1210 described above, is only an example, and any professional in this field would understand, that other types of systems can be designed for automatic marking of meat and fish food products in accordance with the invention.

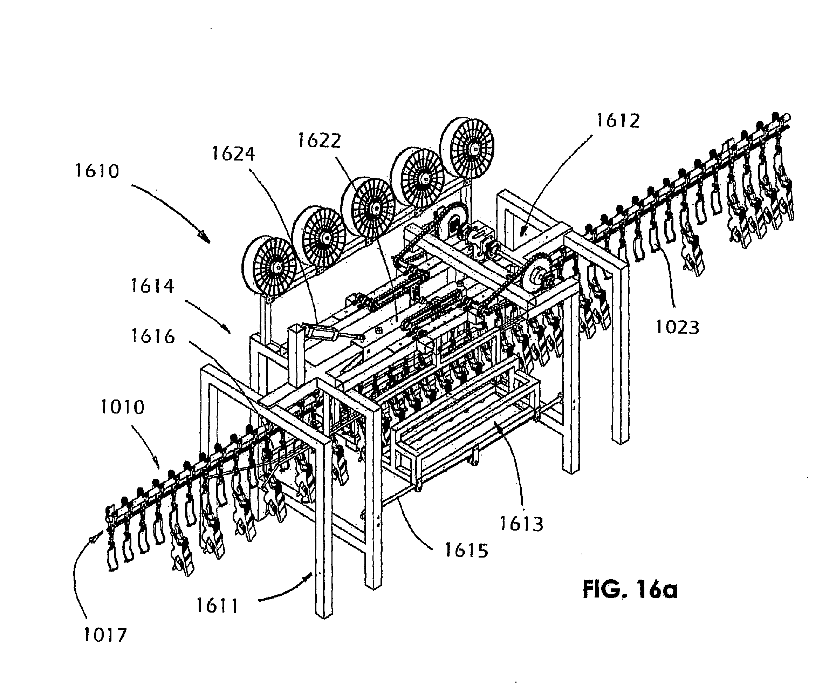

Figures 16a to 16c describe an additional configuration of an automatic array, 1610. Array 1610 too, similarly to array 1210 that was described with reference to Figures 12a to 12i, is amenable to be coupled unto an existing processing line in a plant, such as the 1010 conveyer type, as an "add on" array with similar performance as attributed to the earlier described system 1010 (and hence its components were denoted by the same numbers of those in figure 10).

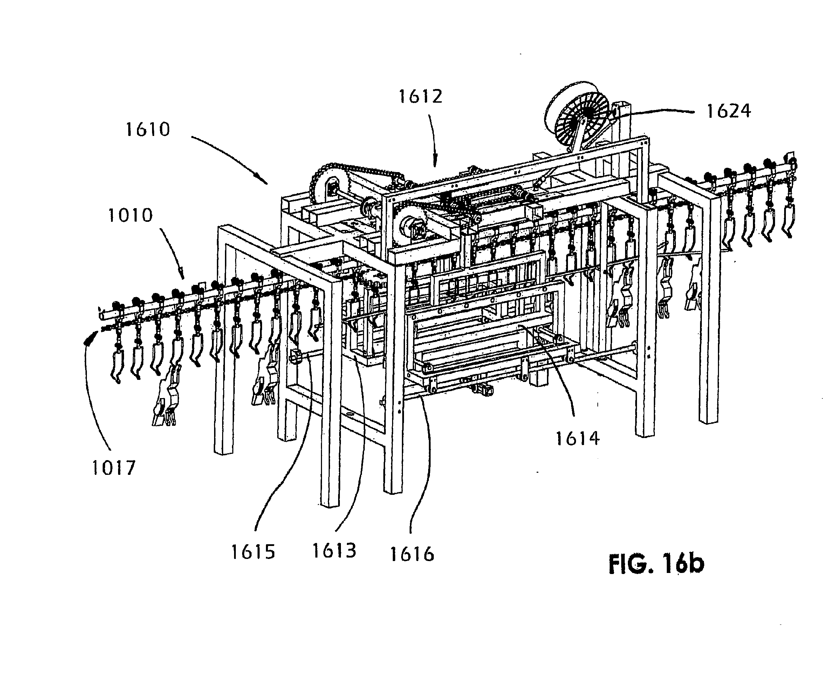

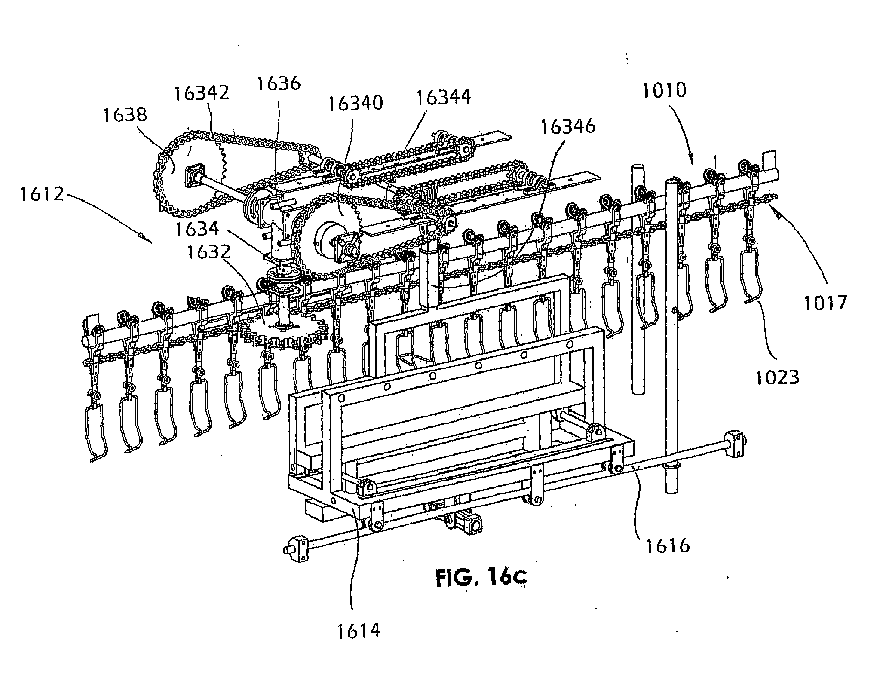

Let us refer to figure 16. This figure provides a general perspective view of a structure 1611 that enables to add this array as an "add on" system to an existing production line without changing the structure of the existing line.

On the structure 1611, a propulsion system 1612 is installed. Propulsion system 1612, also drives - similarly to the action of 1212 that was described when referring to figures 12a to 12i, two carriages 1613 and 1614, providing a cyclical movement that is, essentially, parallel in its direction to the direction of movement of chain 1017 of the poultry food processing line. The cyclical motion of carriages 1613 and 1614, also takes place, by sliding on length wise axes 1615 and 1616, respectively. On each of the carriages 1613 and 1614 there are installed and operated the marking assemblies (that are not illustrated), in a similar mode to the marking assemblies 1218 that were describe when referring to the 1210 array.

Figure 16b, is an additional perspective view of array 1610, drawn from a different angle.

Figure 16c is yet another view with special attention given to the method and components of the propulsion system 1612.

If we refer to Figure 16c, in operation, the chain's 1017 movement forces cog wheel 1632 to rotate. Cog wheel 1632 propels an axis 1634 that transfers movement to transmission gear 1636. Transmission gear 1636 transfers the movement to two opposite sides. At each side there is a drive wheel (1638 and 16340) of chain drive 16342, 16344 (respectively). The chain drives are connected to two opposite carriages 1614 and 1613 (not shown). Both carriages are positioned, each, on each side of the line's conveyor 1010. The chain drive promotes a linear movement of both carriages parallel to and in complete synchronization with the conveyor's movement.
each one of carriages 1613, 1614, slides in its linear movement along an axis 1615, 1616. Each one of these axes also serves as a rotation axis for the purpose of detaching the carriage that slides along it from its connection with the poultry group (as described above in reference to figures 12a to 12i).

If we refer to Figure 16c, the chain drive 16344 is connected to carriage 1614 through a linking bar 16346. If we refer to figures 16a and 16b, The linking bar slides along a bridging component 1622. The bridging component acts as a parallelogram. At the end of the marking procedure a piston 1624 is operated, which elevates bridge 1622. Elevating the bridge causes each one of the carriages 1613 and 1614, to move around its axis. Thus detaching the carriages from the marked poultry group. At the same time, elevating the bridge returns the linking bar and with it the carriage, in a backward linear movement along the axis 1615 and 1616 to the beginning of the procedure.

The operation of timing piston 1624, which indicates the end of the poultry group's marking procedure, is achieved using a sensor (not shown) that detects the approaching of the carriages in a forward linear movement. A second sensor (not shown) on the other side, detects the backward returning movement of the carriages and their nearing in a revolving movement around their axes toward the next group of poultry in need for marking. The sensors might be, for example, optical proximity sensors which are positioned in top of the static components in the array.

A third sensor (for example - an optical sensor which is also positioned on top of the static component of the array, but in front of the carriages' revolving area), constantly monitors the poultry that passes before it. The purpose of the sensor is to verify the presence or absence of the poultry, on the shackle 1023, relatively to the position of the marking assemblies on top of the carriages.

It was found in experiments that implementing an array as described in Figure's 12a to 12i, and 16a to 16c does not require to slowdown the conveyer's speed in the production line (approximately 60 - 80 fowls per minute, or linear speed of approx. 16 - 17 m/min). On the contrary, it is even possible to integrate the array into a production line operating at a higher speed (approx. 120 fowls / minute, approx. 25 m/min).

Any professional in this field would also understand that by a different configuration (that is not illustrated), it is possible to perform markings in accordance with the invention in a semi-automatic manner. In such a configuration, the wrapping of the band and its tightening, are performed by serving manually the meat product or fish designated to be marked, towards marking assembly that is installed as an independent, stand alone machine, which does not have to be necessarily part of the conveyer line.

It will be appreciated by persons who are skilled in the art, that the present invention is not limited by what has been particularly shown and described above. Rather, the scope of the present invention is only defined by the claims that follow.

## Claims

1. A method for marking a food product, attesting to their authentication, comprising the step of:
positioning an device (830; 930) for wrapping plastic bands (840; 960) and an anvil means (820), along the flank of said product (810; 920);
coupling said anvil means (820) unto a surface of said product (810; 920);
advancing said device (830; 930) for wrapping bands (840; 960) to a position for engaging said product (810; 920) while said anvil means (820) is attached to said product (810; 920);
winding said band (840; 960) around said product (810; 920) and said anvil means (820);
feeding a hologram (54; 64; 72; 76; 713; 722) to a location between the tip of a welding means (860) and said band (840; 960);
advancing said welding means (860) towards said anvil means (820);
welding said hologram (54; 64; 72; 76; 713; 722) unto said band (840; 960);
retracting said welding means (860) and;
extracting said anvil means (820) from between said product (810, 920) and said band (840; 960).

2. A method for marking food products as in claim 1. attesting to their authentication, wherein said retracting of said welding means (860) is cyclical, in order to arrive at a subsequent batch of said products (810; 920) intended to be marked.

3. A method for marking a food product, attesting to their authentication in accordance with claim 1, wherein- said advancing of said device (830; 930) for wrapping bands (840; 960), comprises the piercing of said product (810; 920); and wherein- winding said band (840; 960) around the said product (810; 920) and the said anvil means (820) is executed through the aperture formed by said piercing.

4. A method for marking food products, attesting to their authentication in accordance with claim 1, wherein- said hologram (54; 64; 72; 76; 713; 722) is connected to said band (840; 960) by using either one of the means taken from a group consisting of threading onto a band, a riveting, welding and gluing.

5. A method for marking food products, attesting to their authentication In accordance with claim 1, wherein said method is implemented for authentication food markings, selected from the group consisting of "Halal", "kosher", health criteria and "Organic".

6. A system for marking food products, attesting to their authentication, that comprises:
a device (830) for wrapping bands (840; 960) around at least a portion of a food product (810; 920);
a feeding means for feeding a hologram tag (54; 64; 72; 76; 713; 722) towards said food product (810; 920);
a welding means (860) for welding said tag (54; 64; 72; 76; 713; 722) onto said band (840; 960), and
an anvil means (820) for providing support to said welding.

7. A system for marking food products, attesting to their authentication In accordance with claim 6, wherein- said device (830; 930) for wrapping bands (840; 960) is a part of a production line (1110) for processing food products (1013) further comprising a conveyer (1012) upon which said food products are moved and handled.

8. A system for marking food products attesting to their authentication in accordance with claim 6, wherein said hologram (54; 64; 72; 76; 713; 722) is made of a polymeric foil.

9. A system for marking food products, attesting to their authentication in accordance with claim 8, wherein said production line further includes an array comprising:
a Propulsion system (1133) driving said array in a cyclical motion that is essentially parallel to the of movement of said conveyer (1012), and at least one marking assembly (1121) installable upon said propulsion system (1133) and serving to mark at least one food product by a marking tag (54; 64; 72; 76; 713; 722) while said food product (1013) is moving on the conveyer (1012) by wrapping said marking tag (54; 64; 72; 76; 713; 722).

## Patentansprüche

1. Verfahren zum Markieren eines Lebensmittelproduktes zur Ausweisung seiner Echtheit, folgende Schritte aufweisend:
Positionieren einer Vorrichtung (830; 930) zum Schlingen von Kunststoffbändern (840; 960) sowie eines Amboßmittels (820) längs der Flanke des besagten Produktes (810; 920);
Anlegen des besagten Amboßmittels (820) an eine Oberfläche des besagten Produktes (810; 920);
Vorschieben der besagten Vorrichtung (830; 930) zum Schlingen von Bändern (840; 960) in eine Position in Anlage an besagtem Produkt (810; 920) solange besagtes Amboßmittel (820) an besagtem Produkt (810; 920) fixiert ist;
Schlingen des besagten Bandes (840; 960) um besagtes Produkt (810; 920) und besagtes Amboßmittel (820);
Zuführen eines Hologramms (54; 64; 72; 76; 713; 722) an eine Stelle zwischen der Spitze von SchweißmitteIn (860) und besagtem Band (840; 960);
Vorschieben der besagten Schweißmittel (860) in Richtung auf besagtes Amboßmittel (820);
Schweißen des besagten Hologramms (54; 64; 72; 76; 713; 722) auf besagtes Band (840; 960);
Zurückziehen der besagten Schweißmittel (860); und
Herausziehen der besagten Amboßmittel (820) zwischen besagtem Produkt (810; 920) und besagtem Band (840; 960).

2. Verfahren zur Markierung von Lebensmittelprodukten nach Anspruch 1 zur Ausweisung ihrer Echtheit,
worin besagter Rückzug der besagten Schweißmittel (860) zyklisch ist, um so zu einem nachfolgenden Los von besagten zu markierenden Produkten (810; 920) zu gelangen.

3. Verfahren zur Markierung von Lebensmittelprodukten zur Ausweisung ihrer Echtheit nach Anspruch 1,
worin besagtes Vorschieben der besagten Vorrichtung (830; 930) zum Schlingen von Bändern (840; 960) das Durchstechen des besagten Produktes (810; 920) beinhaltet, und
worin das Schlingen des besagten Bandes (840; 960) um besagtes Produkt (810; 920) und besagte Amboßmittel (820) durch die Öffnung hindurch vorgenommen wird, die durch besagten Durchstich gebildet worden ist.

4. Verfahren zur Markierung von Lebensmittelprodukten zur Ausweisung ihrer Echtheit nach Anspruch 1,
worin besagtes Hologramm (54; 64; 72; 76; 713; 722) mit besagtem Band (840; 960) unter Einsatz eines beliebigen Mittels verbunden wird, welches aus einer Gruppe gewählt wird, die das Auffädeln auf ein Band, Vernieten, Verschweißen und Verkleben beinhaltet.

5. Verfahren zur Markierung von Lebensmittelprodukten zur Ausweisung ihrer Echtheit nach Anspruch 1,
worin besagtes Verfahren für das Anbringen von Lebensmittel-Echtheitssiegeln zur Anwendung gebracht wird, welche aus einer Gruppe gewählt sind, die "Halal", "Kosher", Gesundheitskriterien und "Biologisch" enthält.

6. System zur Markierung von Lebensmittelprodukten zur Ausweisung ihrer Echtheit, folgendes beinhaltend:
eine Vorrichtung (830) zum Schlingen von Bändern (840; 960) um wenigstens einen Teil eines Lebensmittelproduktes (810; 920);
Zufuhrmittel zur Zuführung eines Hologrammetiketts (54; 64; 72; 76; 713; 722) zum Lebensmittelprodukt (810; 920);
ein Schweißmittel (860) zum Schweißen des besagten Etiketts (54; 64; 72; 76; 713; 722) an besagtes Band (840; 960), und
ein Amboßmittel (820) zur Stellung eines Widerlagers für besagte Schweißung.

7. System zur Markierung von Lebensmittelprodukten zur Ausweisung ihrer Echtheit nach Anspruch 6,
worin besagte Vorrichtung (830; 930) zum Schlingen von Bändern (840; 960) Teil eines Produktionsbandes (1110) zur Verarbeitung von Lebensmittelprodukten (1013) ist, welches außerdem eine Fördervorrichtung (1012) aufweist, auf welcher die besagten Lebensmittelprodukte weiterbewegt und bearbeitet werden.

8. System zur Markierung von Lebensmittelprodukten zur Ausweisung ihrer Echtheit nach Anspruch 6,
worin besagtes Hologramm (54; 64; 72; 76; 713; 722) aus einer Polymerfolie besteht.

9. System zur Markierung von Lebensmittelprodukten zur Ausweisung ihrer Echtheit nach Anspruch 8,
worin besagtes Produktionsband eine Systemvorrichtung aufweist, die folgendes beinhaltet:
ein Antriebssystem (1133), welches besagte Systemvorrichtung in einer zyklischen Bewegung antreibt, die im wesentlichen parallel zur Bewegung der besagten Fördereinrichtung (1012) verläuft, und wenigstens eine Markierungseinheit (1121), welche auf besagtem Antriebssystem (1133) installierbar ist und zur Markierung wenigstens eines Lebensmittelproduktes mittels eines Markierungsetiketts (54; 64; 72; 76; 713; 722) dient, während besagtes Lebensmittelprodukt (1013) auf der Fördereinrichtung (1012) weiterläuft, indem besagtes Markierungsetikett (54; 64; 72; 76; 713; 722) darum geschlungen wird.

## Revendications

1. Procédé de marquage d'un produit alimentaire, attestant son authenticité, comprenant les étapes consistant à :
positionner le long du flanc dudit produit (810 ; 920) un dispositif (830 ; 930) pour envelopper des bandes de plastique (840 ; 960), et un moyen formant enclume (820) ;
accoupler ledit moyen formant enclume (820) sur une surface dudit produit (810 ; 920) ;
faire avancer ledit dispositif (830 ; 930) pour envelopper des bandes (840 ; 960) dans une position d'engagement dudit produit (810 ; 920), tandis que ledit moyen formant enclume (820) est fixé sur ledit produit (810 ; 920) ;
enrouler ladite bande (840 ; 960) autour dudit produit (810 ; 920) et dudit moyen formant enclume (820) ;
apporter une étiquette hologramme (54 ; 64 ; 72 ; 76 ; 713 ; 722) en un emplacement entre la pointe d'un moyen de soudage (860) et ladite bande (840 ; 960) ;
faire avancer ledit moyen de soudage (860) vers ledit moyen formant enclume (820) ;
souder ladite étiquette hologramme (54 ; 64 ; 72 ; 76 ; 713 ; 722) sur ladite bande (840 ; 960) ;
rétracter ledit moyen de soudage (860) ; et
extraire ledit moyen formant enclume (820) d'entre ledit produit (810 ; 920) et ladite bande (840 ; 960).

2. Procédé de marquage de produits alimentaires selon la revendication 1, attestant leur authenticité, selon lequel ladite rétraction dudit moyen de soudage (860) est cyclique, afin d'arriver sur un lot suivant de produits (810 ; 920) à marquer.

3. Procédé de marquage d'un produit alimentaire, attestant son authenticité, selon la revendication 1, selon lequel ledit avancement dudit dispositif (830 ; 930) pour envelopper des bandes (840 ; 960) comprend le percement dudit produit (810 ; 920), et ledit enroulement de ladite bande (840 ; 960) autour dudit produit (810 ; 920) et dudit moyen formant enclume (820) est effectué à travers l'ouverture formée par ledit percement.

4. Procédé de marquage de produits alimentaires, attestant leur authenticité, selon la revendication 1, selon lequel ladite étiquette hologramme (54 ; 64 ; 72 ; 76 ; 713 ; 722) est reliée à ladite bande (840 ; 960) en utilisant l'un quelconque des moyens pris dans un groupe constitué d'un enfilage sur une bande, d'un rivetage, d'un soudage et d'un collage.

5. Procédé de marquage de produits alimentaires, attestant leur authenticité, selon la revendication 1, selon lequel ledit procédé est mis en oeuvre pour authentifier des marquages alimentaires sélectionnés parmi le groupe constitué de « halal », de « kasher », de critères de santé et de « biologique ».

6. Système de marquage de produits alimentaires, attestant leur authenticité, qui comprend :
un dispositif (830) pour envelopper des bandes (840 ; 960) autour d'au moins une partie d'un produit alimentaire (810 ; 920) ;
un moyen d'alimentation pour apporter une étiquette hologramme (54 ; 64 ; 72 ; 76 ; 713 ; 722) audit produit alimentaire (810 ; 920) ;
un moyen de soudage (860) pour souder ladite étiquette (54 ; 64 ; 72 ; 76 ; 713 ; 722) sur ladite bande (840 ; 960), et
un moyen formant enclume (820) pour fournir un support pour ledit soudage.

7. Système de marquage de produits alimentaires, attestant leur authenticité, selon la revendication 6, dans lequel ledit dispositif (830 ; 930) pour envelopper des bandes (840 ; 960) fait partie d'une chaîne de production (1110) pour traiter des produits alimentaires (1013), comprenant en outre un convoyeur (1012) sur lequel lesdits produits alimentaires sont déplacés et traités.

8. Système de marquage de produits alimentaires, attestant leur authenticité, selon la revendication 6, dans lequel ladite étiquette hologramme (54 ; 64 ; 72 ; 76 ; 713 ; 722) est constituée d'une feuille polymère.

9. Système de marquage de produits alimentaires, attestant leur authenticité, selon la revendication 8, dans lequel ladite chaîne de production comprend en outre un groupe comprenant :
un système de propulsion (1133) entraînant ledit groupe en un mouvement cyclique qui est essentiellement parallèle au déplacement dudit convoyeur (1012), et au moins un ensemble de marquage (1121) qui peut être installé sur ledit système de propulsion (1133) et qui sert à marquer au moins un produit alimentaire au moyen d'une étiquette de marquage (54 ; 64 ; 72 ; 76 ; 713 ; 722) tandis que ledit produit alimentaire (1013) se déplace sur le convoyeur (1012), en enveloppant le produit de ladite étiquette de marquage (54 ; 64 ; 72 ; 76 ; 713 ; 722).
